# Europäisches Patentamt
## European Patent Office
## Office européen des brevets

(19)

(11) Veröffentlichungsnummer: **0 199 147 B1**

(12) **EUROPÄISCHE PATENTSCHRIFT**

(45) Veröffentlichungstag der Patentschrift: 27.06.90

(51) Int. Cl.⁵: **G11B 20/14, H04L 7/02, H03M 5/04**

(21) Anmeldenummer: 86104436.0

(22) Anmeldetag: 01.04.86

(54) **Schaltungsanordnung zum Wiedergewinnen binärer Datensignale und in diesen enthaltener Datentaktsignale.**

(30) Priorität: 03.04.85 DE 3512224

(43) Veröffentlichungstag der Anmeldung: 29.10.86 Patentblatt 86/44

(45) Bekanntmachung des Hinweises auf die Patenterteilung: 27.06.90 Patentblatt 90/26

(84) Benannte Vertragsstaaten:
AT CH DE FR GB IT LI NL SE

(56) Entgegenhaltungen:
EP-A- 0 034 055
EP-A- 0 091 200
DE-A- 3 202 945
DE-A- 3 240 731
GB-A- 2 075 804
GB-A- 2 080 658
US-A- 4 280 099

PATENTS ABSTRACTS OF JAPAN, Band 8,
Nr. 74 (E-236)[1511], 6. April 1984; & JP - A
- 58 220 534 (SHINHO DENKI K.K.) 22.12.1983
ELECTRONICS, Band 52, Nr. 20, 27. September 1979,
Seiten 127-128; V. KARMARKAR: "Low-cost m2fm
decoder reduces floppy bit-shift"

(73) Patentinhaber: Siemens Aktiengesellschaft,
Wittelsbacherplatz 2, D-8000 München 2(DE)

(72) Erfinder: Fischer, Helmut, Dipl.-Ing., Oertlinweg 6,
D-8000 München 90(DE)

ACTORUM AG

**Beschreibung**

Die Erfindung bezieht sich auf eine Schaltungsanordnung zum Wiedergewinnen binärer Datensignale und in diesen enthaltener Datentaktsignale gemäß dem Oberbegriff des Hauptanspruches.

Bei der Übertragung von Daten von einem Datensender zu einem Datenempfänger muß im allgemeinen der Takt des Datenempfängers auf den Takt des Datensenders synchronisiert werden. Eine Schwierigkeit bedeutet dabei, daß der Strom der Datensignale, infolge von zeitlich veränderlichen Sendeparametern mit zeitlich veränderlicher Frequenz oder auch infolge von statistisch auftretenden kurzzeitigen Störungen am Empfangsort, nur unvollkommen empfangen wird.

Ein spezielles Beispiel für die skizzierte Problematik ist z. B. das Lesen der aufgezeichneten Daten von Magnetschichtspeichern. Die gelesenen Daten werden ohne einen separaten Datentakt übertragen und bekanntlich ist es auch zum Zurückgewinnen der ursprünglich gespeicherten binären Daten notwendig, den im Strom der Daten enthaltenen Datentakt zu separieren. Ein Phasenregelkreis im Datenempfänger muß dabei verschiedene Anforderungen erfüllen. Bei Frequenzschwankungen im Datensender, d. h. also im angesprochenen Anwendungsfall bei Änderungen der Abtastgeschwindigkeit, muß die Schaltungsanordnung solchen Schwankungen in einen bestimmten Bereich folgen können, sie muß also ein Mitziehverhalten besitzen. Bei Ausfall eines oder mehrerer Datenimpulse im Datenstrom muß die Schaltungsanordnung ihre zuletzt eingenommene Frequenz beibehalten, also ein bestimmtes Halteverhalten aufweisen. Kleine Schwankungen der Datenimpulse um ihre zeitliche Sollage sollen für die Erzeugung der Taktimpulse unberücksichtigt bleiben. Schließlich soll die Schaltungsanordnung nach einer Unterbrechung der Übertragung möglichst schnell wieder auf den Datenstrom einsynchronisierbar sein, also ein günstiges Einphasverhalten besitzen.

Zu diesem Zweck sind sowohl analoge als auch digitale Phasenregelkreise bekannt. Analoge Phasenregelkreise erfordern ein häufiges Nachjustieren, sind daher teuer hinsichtlich der Ausfallzeiten und dem Wartungsaufwand. Darüber hinaus sind sie gelegentlich hinsichtlich ihrer Regelfunktion nicht ausreichend stabil.

Speziell im Bereich der digitalen Datenübertragung, d. h. also auch in dem oben skizzierten Anwendungsfall bei Magnetschichtspeichern, sind deshalb auch digitale Phasenregelkreise oder hybride Phasenregelkreise als Mischformen bekannt geworden. Gewöhnlich ist all diesen Schaltungsanordnungen gemeinsam, daß der Phasenregelkreis aus einem Phasendetektor und einem gesteuerten Oszillator besteht. Dabei ist dieser Oszillator auf einen Sollwert, zumeist basierend auf einem internen Takt, eingestellt und mit Hilfe des Phasendetektors wird ein Istwert der augenblicklichen Frequenz und Phase des Datentaktes der übertragenen Signale ermittelt. Aus dem Vergleich von Istwert und Sollwert wird bei Abweichungen gegebenenfalls ein neuer Sollwert ermittelt und der Oszillator auf diesen eingestellt.

Ein Beispiel für einen solchen digital ausgebildeten Phasenregelkreis ist aus US-A-4 109 236 bekannt. Mit einer Frequenz, die aus der Datenrate bereits empfangener Daten abgeleitet ist, wird ein Erwartungszeitraum, d. h. ein Fenster gebildet und kontinuierlich angepaßt, in dem die signifikanten Flußwechsel der empfangenen Datensignale auftreten sollen, sofern keine Störungen aufgetreten sind. Dazu werden die empfangenen Datensignale mit einem internen Takt bewertet und mit Hilfe eines Hauptzählers wird die Anzahl der internen Taktimpulse zwischen den einzelnen Flußwechseln der Datensignale über mehrere Datenrahmen, d. h. Teilfolgen von Datensignalen innerhalb eines Datenblockes gemittelt. Der so erhaltene und immer wieder aktualisierte Mittelwert dient dazu, mit Hilfe eines Fenstergenerators den genannten Erwartungszeitraum erneut festzulegen.

In US-A-4 357 707 ist ein weiterer digitaler Phasenregelkreis beschrieben, mit dem ebenfalls ein derartiges Fenster gebildet wird. Allerdings weist diese bekannte Lösung insofern Besonderheiten auf, daß einmal die Breite dieses Fensters variabel gestaltet ist und andererseits seine Lage, aber auch Dauer aus der Lage der beiden vorausgegangenen signifikanten Flußwechsel bezüglich der diesen zugeordneten Fenster abgeleitet wird.

Aus US-A-4 280 099 ist weiterhin bekannt, bei einem Verfahren zum Wiedergewinnen eines Bittaktsignales einen Phasenregelkreis mit einem einstellbaren Frequenzteiler und einem Fenstergenerator zu verwenden. Eine Frequenzablage wird festgestellt, wenn die Datensignalflanke außerhalb des Erwartungszeitraumes liegt. In Abhängigkeit von der Richtung dieser Ablage wird im selben Zyklus, d. h. der aktuellen Bitperiode sofort die Einstellung des Frequenzteilers korrigiert. Liegt dagegen die Datensignalflanke innerhalb des Erwartungszeitraumes, kann lediglich eine Phasenablage vorliegen. In diesem Fall wird durch einen Zykluszähler ein Bewertungszeitraum definiert, in dem durch einen Auf-/Abwärts-Zähler ein Mittelwert für positive bzw. negative Phasenablagen gebildet wird. Erst mit diesem Mittelwert wird der Frequenzteiler nachjustiert, um kurzzeitige, sporadische Phasenverschiebungen, wie "phase jitter" nicht wirksam werden zu lassen.

In den bekannten Phasenregelkreisen ist das jeweilige Schaltungskonzept nur mit digitalen Bausteinen realisiert. Von der Funktion her gehen die bekannten Lösungen von einer Mittelwertbildung bei der Bewertung der Länge vorausgegangener Bitzellen, d. h. Datensignalperioden aus, um kurzzeitige, statistisch auftretende Schwankungen der Abtastgeschwindigkeit zu eliminieren und den Phasenregelkreis nicht überzukompensieren.

Betrachtet man das Regelungsproblem etwas abstrakter, dann besteht bei einem Phasenregelkreis - wie bei allen Regelkreisen - grundsätzlich die Aufgabe, aus einem Vergleich eines Sollwertes mit einem tatsächlich festgestellten Istwert eine Stellgröße abzuleiten, um einen neuen Sollwert dem aktuellen Istwert anzugleichen. Aus dieser Sicht ist den bekannten Phasenregelkreisen gemeinsam, daß der neue Sollwert - festgelegt durch eine fest verdrahtete Schaltung - unmittelbar einem in einer vorgegebenen Weise gemittelten, bisherigen Istwert entspricht. Die vorgegebene Art der Mittelwertbildung legt lediglich eine Zeitbasis fest, was bei einer verlängerten Zeitbasis zwar kurzzeitige Schwankungen eliminiert oder unberücksichtigt läßt, andererseits aber dazu führt, daß größere Phasenänderungen wiederum zu sprungweisen Anpassungen führen. Eine Mittelwertbildung über mehrere Bitzellen der Datensignale hinweg ist daher nicht unproblematisch.

Weiterhin ist aus GB-A-2 080 658 eine Schaltungsanordnung zur Rückgewinnung eines Bittaktsignales aus seriell übertragenen Datensignalen bekannt, bei der als Sollwertgeber für einen ladbaren, die interne Zeitbasis eines Phasenregelkreises bildenden Zähler ein Festwertspeicher eingesetzt wird. Über Adreßeingänge werden dem Festwertspeicher eine Anzahl von Istwerten angeboten, um den Sollwert zu generieren. Dazu zählen die Phasenablagen für die aktuelle und die vorausgegangene Bitzelle, sowie Information über die Ist-Geschwindigkeit eines rotatorischen Magnetschichtspeichers, der die Datensignale liefert. Damit ist ein digitaler Phasenregelkreis geschaffen, der die bekannten Nachteile entsprechender analoger Regelkreise, wie Herstellungsaufwand und mangelnde Betriebssicherheit aufgrund der Alterung von Bauteilen vermeidet.

Darüber hinaus ist es aber wünschenswert, mit der Anwendung einer digitalen Schaltungstechnik nicht nur die Nachteile analoger oder hybrider Schaltungsanordnungen zu vermeiden, sondern auch die Eigenschaften und Anwendungsmöglichkeiten der digitalen Schaltungstechnik hinsichtlich der Regelfunktion voll zu nutzen. In der digitalen Schaltungstechnik stehen bekanntlich für die Realisierung komplexer Funktionen entsprechende Mittel, wie programmierte Steuerungen oder sequentielle Schaltnetzwerke zur Verfügung. Einer Verwendung dieser bekannten Mittel steht allerdings die eine Einschränkung entgegen, daß mit wachsender Komplexität der Steuerungsaufgabe auch der erforderliche Zeitaufwand zur Lösung dieser Aufgabe ansteigt.

Der vorliegenden Erfindung liegt daher die Aufgabe zugrunde, eine Schaltungsanordnung der eingangs genannten Art zu schaffen, bei der der Phasenregelkreis nicht nur lediglich aus digitalen Bausteinen aufgebaut ist, sondern darüber hinaus so ausgebildet ist, daß der aktuelle Istwert, d. h. die gegenwärtige Phasenlage des Datensignals möglichst genau ermittelt wird und außerdem so rechtzeitig zur Verfügung steht, daß nach einem Vergleich des Ist- und Sollwertes gegebenenfalls noch ausreichend Zeit zur Verfügung steht, um einen neuen Sollwert rechtzeitig, also angepaßt an den Funktionszyklus des Phasenregelkreises, zur Verfügung zu stellen.

Bei einer Schaltungsanordnung der eingangs genannten Art wird diese Aufgabe erfindungsgemäß durch die im Kennzeichen des Hauptanspruches beschriebenen Merkmale gelöst.

Bei dieser Lösung werden die der digitalen Schaltkreistechnik innewohnenden Möglichkeiten einer leichten Anpaßbarkeit an bestimmte Anwendungsfälle optimal genutzt. Hinsichtlich der Schaltungstechnik bedeutet dies, daß der Phasendetektor und der Oszillator des Regelkreises als ein einziger integrierter Schaltkreis in VLSI-Technik aufgebaut sein können. Diesem komplexen integrierten Baustein ist dann als weiterer Baustein ein sequentielles Schaltnetzwerk, ein programmierbares logisches Netzwerk oder einfach nur ein Festwertspeicher zugeordnet, der dem Phasenregelkreis einen neuen, aktualisierten Sollwert liefert. Bei einer entsprechend gewählten Schaltkreistechnik ist es dann gerade im Zusammenhang mit der Aufbereitung der von Magnetschichtspeichern gelesenen Datensignale möglich, einen solchen Geber für den aktualisierten Anfangswert zusammen mit mehreren der einmal pro Datenspur vorzusehenden Phasenregelkreise einzusetzen. Dies läßt sich auch so ausgestalten, daß eine einmal gestörte Datenspur durch Übernahme des aktuellen Sollwertes aus einer benachbarten Spur wieder einzuphasen ist.

Rein funktionell betrachtet, wird dies möglich, weil die erfindungsgemäße Lösung einen Schaltkreis schafft, bei dem die aktuelle Information bezüglich des Verarbeitungszyklus sehr frühzeitig zur Verfügung steht. Dies beruht insbesondere auf dem Aufteilen des aktuellen Phasenwertes in einen voreilenden bzw. einen nacheilenden Phasenanteil, d. h. also auf dem besonderen Zusammenwirken von Schieberegister und Zähler. Vereinfacht läßt sich dies so verdeutlichen: An sich bestimmt der Zeitpunkt, zu dem der verzögerte Markierungsimpuls am Ausgang des Schieberegisters erscheint, die Istlage eines Flußwechsels in bezug auf den Zählerzyklus, d. h. den Ablauf im Phasenregelkreis. Das Schieberegister bildet aber, noch vor dem Eintreten dieses Ereignisses einen Zeiger, der eine exakte Voraussage erlaubt, wann dieses Ereignis stattfinden wird.

Damit lassen sich, auf dem Konzept der erfindungsgemäßen Lösung basierend, völlig neue Ausgestaltungen eines digitalen Phasenregelkreises realisieren. Offensichtlich kann man, z. B. bei einer Implementierung mit einem Festwertspeicher als Geber, für die neuen Anfangswerte die unterschiedlichsten Randbedingungen in die Regelcharakteristik einbeziehen, d. h. bei allen möglichen Kombinationen von Soll- und Istwerten in unterschiedlicher Weise das Mitziehverhalten bzw. das Halteverhalten, wie oben angedeutet, sehr freizügig festlegen. In diesem Zusammenhang ist es z. B. auch denkbar, Filterfunktionen oder andere Signalformungen wie z. B. den Ausgleich von charakteristischen Spitzenwertverschiebungen bei verschiedenen Datensignalfolgen in die Regelfunktion einzubeziehen.

Diese Flexibilität des Schaltungskonzeptes schlägt sich zudem in gegenüber herkömmlichen Schaltungen reduzierten Entwicklungskosten bei höherer Qualität nieder und erlaubt spätere Anpassungen oder

EP 0 199 147 B1

Erweiterungen durchzuführen, ohne daß damit zwangsläufig auch die gesamte Struktur oder auch nur Ausgestaltungen des digitalen Phasenregelkreises neu festgelegt werden müssen. Die erfindungsgemäße Lösung rechtfertigt damit also auch bereits bei zunächst kleineren Stückzahlen für einen digitalen Phasenregelkreis die Implementierung in Form eines integrierten Großschaltkreises auch im Hinblick auf seine Zukunftssicherheit.

Ein Ausführungsbeispiel der Erfindung wird im folgenden anhand der Zeichnungen näher beschrieben. Dabei zeigt

Fig. 1 ein Blockschaltbild des digitalen Phasenregelkreises,
Fig. 2 ein Blockschaltbild einer Steuerlogik des Phasenregelkreises,
Fig. 3 eine Schaltungsanordnung eines Synchronisierungsnetzwerkes dieser Steuerlogik,
Fig. 4 eine Reihe von Impulsdiagrammen, in denen Eingangs- und Ausgangssignale des Synchronisierungsnetzwerkes und weitere, davon abgeleitete Signale dargestellt sind,
Fig. 5 den schaltungsmäßigen Aufbau eines Frequenzregisters des Phasenregelkreises, dessen Inhalt dem Sollwert, d. h. dem Augenblickswert der Frequenz des Datenstromes entspricht,
Fig. 6 die Schaltungsanordnung eines Fenstergenerators der Steuerlogik zum Erzeugen bestimmter Fenstersignale,
Fig. 7 in einem Blockschaltbild den Aufbau eines Multiplexers, der zum Eingeben neuer Anfangswerte in einen Zähler des Phasenregelkreises verwendet wird,
Fig. 8 den Schaltungsaufbau dieses Zählers, der einen steuerbaren Oszillator des Phasenregelkreises bildet,
Fig. 9 das Schaltbild für einen Zustandsgenerator der Steuerlogik zum Erzeugen bestimmter Zeitsteuersignale innerhalb eines Funktionszyklus des Phasenregelkreises,
Fig. 10 das Blockschaltbild eines an den Zähler angeschlossenen Speicherregisters des Phasenregelkreises,
Fig. 11 das Blockschaltbild eines Schieberegisters mit dem empfangene Datensignale verzögert werden und ein damit verbundenes Zwischenspeicherregister und
Fig. 12 das Schaltbild für ein Datenausgabenetzwerk der Steuerlogik des Phasenregelkreises, in dem die wiedergewonnenen Daten- und Taktsignale erzeugt werden.

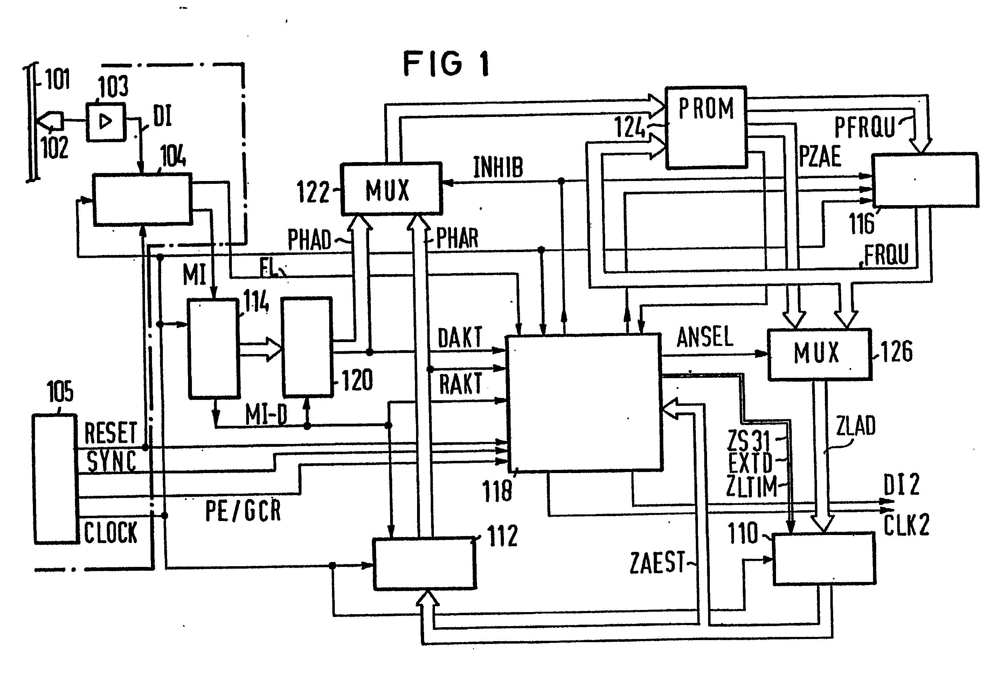

Das in Fig. 1 dargestellte Blockschaltbild enthält neben den wesentlichen Baugruppen für den Phasenregelkreis wegen des besseren Verständnisses auch an sich bekannte, der Schreib-Lese-Elektronik des Magnetbandgerätes zuzurechnende Baugruppen. Die Schnittstelle zwischen diesen hier nicht zur Erfindung rechnenden Baugruppen und dem eigentlichen Phasenregelkreis ist als eine strichpunktierte Linie angedeutet. Innerhalb dieser Linie ist schematisch ein Magnetband 101 dargestellt, das mit einem Schreib/Lese-Kopfsystem 102 beschrieben bzw. gelesen wird. Die hier interessierenden Lesedaten werden in einem Verstärker 103 verstärkt und als Datensignale DI einer Entstörschaltung 104 zugeführt. Die Entstörschaltung 104 dient im wesentlichen dazu, aus den möglicherweise gestörten Datensignalen DI durch Unterdrückung von Störimpulsen störbereinigte Datensignale mit eindeutigen Signalflanken abzuleiten.

In der hier vorliegenden Ausführungsform werden die störbereinigten Daten in Form von Markierungsimpulsen MI und Flankensignalen FL beschrieben. Ein Markierungsimpuls MI ist ein dynamisches Rechtecksignal, dessen Vorderflanke mit einer Flanke des störbereinigten Datensignales DI zusammenfällt. Das Flankensignal FL dagegen ist ein statisches Signal, dessen Signalzustand zwischen zwei aufeinanderfolgenden Markierungsimpulsen MI jeweils die Richtung des letzten Flankenwechsels beim Datensignal DI anzeigt. Beide Signale beschreiben also eindeutig Rechtecksignale, die den störbereinigten Datensignalen DI entsprechen.

Mit einem Block 105 ist schließlich eine zentrale Gerätesteuerung angedeutet, an die zentrale Steuerleitungen angeschlossen sind, die gemeinsam als Steuerbus bezeichnet werden. Im gegenwärtigen Fall sind von diesem Steuerbus lediglich vier Steuerleitungen von Interesse. Eine erste Steuerleitung führt dem Phasenregelkreis einen Systemtakt CLOCK zu. Eine zweite Steuerleitung führt ein generelles Rücksetzsignal RESET, das den Phasenregelkreis in einen definierten Ausgangszustand versetzt. Eine dritte Steuerleitung dient zum Übertragen eines Synchronisiersignales SYNC, das im Phasenregelkreis einen Synchronisierungsvorgang zum Einstellen eines Anfangswertes auslöst. Schließlich wird über eine vierte Steuerleitung ein Auswahlsignal PE/GCR übertragen, das das gerade verwendete Aufzeichnungsverfahren kennzeichnet, dabei bezeichnet PE das PHASE ENCODING-Verfahren bzw. GCR das GROUP CODED RECORDING-Verfahren.

Die übrigen, in Fig. 1 dargestellten Teile der Schaltungsanordnung beziehen sich nun auf den digitalen Phasenregelkreis selbst. Er enthält einen ladbaren Zähler 110 und ein Speicherregister 112, das den Zählwert bei Eintreffen eines Flußwechsels speichert. Durch ein Schieberegister 114 werden die Markierungsimpulse MI, gesteuert durch den Systemtakt CLOCK, hindurchgeschoben. In einem Frequenzregister 116 ist der aktuelle Wert der augenblicklichen Frequenz der Datensignale DI bzw. die Länge einer Bitzelle, d. h. der nominale Abstand der Markierungsimpulse MI in Form der Differenz vom maximal möglichen Abstand gespeichert. Eine Steuerlogik 118 steuert das Zusammenarbeiten der genannten Einheiten.

4

Der dem Phasenregelkreis zugeführte Markierungsimpuls MI mit einer Länge, die einer Periodendauer des Systemtaktes CLOCK entspricht, wird mit der Frequenz des Systemtaktes durch das Schieberegister 114 hindurchgeschoben. Die Länge dieses Schieberegisters kann beispielsweise 16 Bit betragen. In diesem Fall erscheint ein verzögerter Markierimpuls MI-D nach 16 Systemtakten am Ausgang dieses Schieberegisters. Er wird unter anderem dem Speicherregister 112 zugeführt, das, durch dieses Signal gesteuert, den aktuellen Zählerstand des Zählers 110 übernimmt. Der Zähler 110 ist beispielsweise ein 16-stufiger Dualzähler mit maximal 32 Zählerwerten. Erreicht nun der Zähler vor dem Auftreten des verzögerten Markierimpulses MI-D bereits einen vorgegebenen Zählwert, z. B. den Zählwert "16", so wird der aktuelle Zustand des Schieberegisters 112 festgehalten und umcodiert. Dazu dient ein Zwischenspeicherregister 120. Dieses Zwischenspeicherregister 120 hält damit die Lage des Markierungsimpulses MI im Schieberegister 114 fest.

Mit den obigen Festlegungen wird also im Speicherregister 112 der jeweils aktuelle Zählerstand gespeichert, wenn er zwischen dem Wert "0" und dem Wert "15" zum Zeitpunkt des Auftretens des verzögerten Markierimpulses MI-D liegt. Im Zwischenspeicherregister 120 werden dagegen Zählerwerte zwischen "16" und "31" festgehalten, denn aus der Lage des Markierimpulses MI im Schieberegister 114 zum Zeitpunkt des Auftretens des vorgegebenen Zählerwertes "16" läßt sich auf den dann aktuellen Zählerstand schließen, bei dem der verzögerte Markierimpuls MI-D am Ausgang des Schieberegisters 114 aktiv wird.

Es ist ein erster Multiplexer, als Phasenmultiplexer 122 bezeichnet, mit zwei Gruppen von Eingängen vorgesehen, die jeweils über eine mit PHAD bezeichnete Busleitung an die Ausgänge des Speicherregisters 112 bzw. über eine mit PHAR bezeichnete Busleitung an die Ausgänge des Zwischenspeicherregisters 120 angeschlossen sind. Wie schematisch angegeben, umfassen diese Busleitungen unter anderem auch Steuerleitungen DAKT bzw. RAKT, die der Steuerlogik 118 zugeführt sind.

Ausgelöst durch die Steuerlogik 118, schaltet der Phasenmultiplexer 122 selektiv jeweils eine der beiden Gruppen von Eingangssignalen auf Adreßeingänge eines programmierbaren Festwertspeichers 124 durch. Über weitere Adreßeingänge wird diesem Festwertspeicher zugleich der Inhalt des Frequenzregisters 116 über eine weitere Busleitung FRQU angeboten. Dem Festwertspeicher 124 wird damit eine Information über die augenblickliche Frequenz und die aktuelle Phasenlage der Datensignale zugeführt. Wie später noch detaillierter erläutert wird, ist der Inhalt des Festwertspeichers 124 so festgelegt, daß aufgrund dieser Adreßinformation ein neuer Anfangswert ausgewählt wird. Dieser besteht aus einem Frequenzanteil, der über einen Ladebus PFRQU dem Frequenzregister 116 zugeführt wird und aus einem neuen Ladewert für den Zähler 110, der über einen Ladebus PZAE übertragen wird.

Schließlich ist ein zweiter Multiplexer, als Zählermultiplexer 126 bezeichnet, dem Zähler 110 zugeordnet. Er ist eingangsseitig an die beiden Busleitungen FRQU bzw. PZAE angeschlossen und schaltet, über ein Auswahlsignal ANSEL von der Steuerlogik 118 gesteuert, selektiv eine dieser beiden Eingangsinformationen über eine Ausgangsbusleitung ZLAD zum Zähler 110 als neuen Ladewert durch.

Welchen dieser beiden Werte der Zählermultiplexer 126 selektiert, hängt davon ab, ob in der vorangegangenen Bitzelle der Datensignale DI ein Flußwechsel erkannt wurde oder nicht. War dies nicht der Fall, so wird der aktuelle Inhalt des Frequenzregisters 116 als neuer Anfangswert bzw. Ladewert für den Zähler 110 interpretiert. Wurde dagegen ein Flußwechsel erkannt, so steht vom Zählerstand "16" ab die Information über die aktuelle Phasenlage zur Verfügung. Es ist daher möglich, vor dem Erreichen des Endes des Zählerzyklus, d. h. vor dem Zählerstand "31" aus dem Festwertspeicher 124 die neuen Anfangswerte für den Zähler 110 und das Frequenzregister 116 zu erhalten.

Mit dem Schieberegister 114, dem zugeordneten Zwischenspeicherregister 120, sowie dem Speicherregister 112 und dem Phasenmultiplexer 122 ist also ein Phasendetektor für den Phasenregelkreis gebildet. Der Zähler 110 bildet einen steuerbaren Oszillator, der von der Steuerlogik 118 über Steuerleitungen ZS31, EXTD, ZLTIM angesteuert wird. Immer dann, wenn er seinen Endwert erreicht hat, wird er in einem Ladezyklus mit dem vom Zählermultiplexer 126 zugeführten Ladewert geladen. Dieser Ladewert liegt im vorliegenden Ausführungsbeispiel zwischen "0" und "15" und ist der aktuelle Anfangswert für den Zählzyklus des Zählers, der damit synchron zu der Augenblicksfrequenz der Datensignale DI bzw. deren Phasenlage abläuft. Damit bestimmt auch der laufende Zählerstand des Zählers 110 den Steuerablauf innerhalb der Steuerlogik 118, zu diesem Zweck wird laufend der Zählerzustand des Zählers 110 über den Zählerausgangsbus ZAEST dieser Steuerlogik 118 zugeführt.

Ohne zunächst Einzelheiten der schaltungstechnischen Ausgestaltung dieses digitalen Phasenregelkreises zu erläutern, soll, um des besseren Allgemeinverständnisses wegen, dieses Konzept der Phasenregelung noch etwas näher betrachtet werden. Voraussetzungsgemäß speichert das Frequenzregister 116 die Augenblicksfrequenz des Datenstromes, die sich aus dem zeitlichen Abstand der Markierungsimpulse MI-D durch Zählen der zwischen zwei aufeinanderfolgenden Markierungsimpulsen ablaufenden Perioden des Systemtaktes CLOCK ergibt. Ist die Frequenz dieses Systemtaktes CLOCK z. B. so gewählt, daß der zeitliche Abstand zwischen zwei aufeinanderfolgenden Markierungsimpulsen MI-D bei Nenngeschwindigkeit des Magnetbandes 101 24 Perioden des Systemtaktes entspricht, dann müßte bei dieser Bandgeschwindigkeit auch der Zählzyklus des Zählers 110 eine entsprechende Länge haben. Im gewählten Beispiel hat der Zähler 110 32 Zählerzustände ZS00 bis ZS31. Wenn dann ein Zählzyklus eingestellt werden soll, der der Augenblicksfrequenz des Datenstromes entspricht, so muß dieser Zähler auf einen Anfangswert "8" gesetzt werden. Dies ist der Ladewert bei Nenngeschwindigkeit des Magnetbandes.

Aus obiger Erläuterung des Konzeptes des Phasenregelkreises ergibt sich, daß dieser auf der Augenblicksfrequenz des Datenstromes basierende Wert als aktueller Frequenzwert im Frequenzregister 116 gespeichert ist. Dies läßt sich in Gleichung (1) ausdrücken:

(1) [FREG] = n . (ZAEmax + 1 – AB) + RU

Dabei bedeutet:

ZAEmax den Maximalwert des Zählers,

AB den Abstand zwischen zwei Markierungsimpulsen bei der augenblicklichen Bandgeschwindigkeit,

n einen Multiplikator, der sinnvoller Weise eine Potenz von 2 ist und

RU einen Rundungswert.

Unter den obigen Voraussetzungen ist der Maximalwert des Zählers 110 ZAEmax = 31 und der Bitabstand bei Nenngeschwindigkeit des Magnetbandes AB = 24. Wird nun im Ausführungsbeispiel ein Multiplikator n = 4 festgelegt, so enthält das Frequenzregister 116 bei Nenngeschwindigkeit des Magnetbandes den Wert "32". Wegen des Multiplikators n = 4 ergibt dieser Inhalt des Frequenzregisters 116 also einen Ladewert für den Zähler 110 mit 32/4 = 8,0, d. h. den oben genannten Ladewert des Zählers 110. In der Kurzbeschreibung des Phasenregelkreises wurde angegeben, daß der Zähler 110 mit Werten zwischen "0" und "15" geladen werden kann, daraus ergibt sich mit dem angenommenen Multiplikator n = 4, daß das Frequenzregister 116 auf Werte zwischen "0" und maximal "63" einstellbar sein muß, also bei binärer Darstellung des der Augenblicksfrequenz entsprechenden Wertes als ein sechsstelliges Register auszubilden ist.

Der im Frequenzregister 116 gespeicherte Wert dient zwei Zielen. Ist in der laufenden Bitzelle ein Flußwechsel ausgefallen, so wird am Ende des Zyklus des Zählers 110 der aktuelle Speicherwert aus dem Frequenzregister 116 genommen und damit der Zähler für den nächsten Zyklus auf seinen Anfangswert eingestellt. Beim angenommenen Beispiel mit einem Ladewert von "8" hat dann die nächste Bitzelle eine Sollänge von "24". Trifft dagegen in der laufenden Bitzelle ein Flußwechsel ein, d. h. liegt damit ein Istwert vor, so wird der Inhalt des Frequenzregisters 116 als Maß für die Sollage herangezogen und bei einer Abweichung eine Korrektur vorgenommen. Bekanntlich hängt die Sollage eines Flußwechsels bezüglich der definierten Bitzelle von der Wahl des magnetischen Aufzeichnungsverfahrens ab. So liegt z. B. beim PE (PHASE ENCODING)-Verfahren ein Flußwechsel immer in der Mitte der Bitzelle und gegebenenfalls ein zusätzlicher Flußwechsel am Ende der Bitzelle. Beim GCR (GROUP CODED RECORDING)-Verfahren liegt dagegen ein Flußwechsel immer und nur in der Bitzellenmitte, jedoch treten nicht bei allen Bitzellen Flußwechsel auf.

Deshalb wird für die hier gegebene Erläuterung beispielhaft angenommen, daß die Sollage für den Flußwechsel mit der Bitzellenmitte zusammenfallen soll. Bezeichnet man mit LW den Ladewert für den Zähler 110, dann ergibt sich aus den obigen Erläuterungen die Sollage für einen Flußwechsel FW aus folgender Beziehung (2):

$$(2) \quad FWsoll = LW + \frac{ZAEmax - LW}{2}$$

$$= \frac{n \cdot (ZAEmax + LW)}{2n}$$

Dabei entspricht der TERM "nLW" dem Frequenzregisterinhalt [FRG] und somit ergibt sich für das angenommene Beispiel:

$$(2a) \quad FWsoll = \frac{124 + [FREG]}{8}$$

Aus der Beziehung (2a) läßt sich ohne weiteres die Sollage des Flußwechsels bei Nenngeschwindigkeit des Magnetbandes, also bei dem oben angenommenen Beispiel, errechnen. Sie ergibt in diesem Fall den Wert "19,5". Angenommen, der Flußwechsel tritt aber bereits früher, d. h. beispielsweise bei einer Phasenlage "17" auf - natürlich sind wegen der binären Funktion des Zählers 110 auch nur ganzzahlige Phasenlagen möglich - dann beträgt der Phasenfehler "- 2,5". Diese Ablage von der Sollage muß nun korrigiert werden.

Gemäß der einleitenden Beschreibung wird dazu am Ende des Zyklus des Zählers 110 der Inhalt des Speicherregisters 112 über den Phasenmultiplexer 122 den entsprechenden Adreßeingängen des Festwertspeichers 124 und seiner zweiten Gruppe von Adreßeingängen der Inhalt des Frequenzregisters 116 angeboten. Damit wird eine Speicherzelle ausgewählt, in der ein entsprechender errechneter korrigierter Wert für das Frequenzregister 116 und ein Ladewert für den Zähler 110 gespeichert ist. Für die Berechnung der Korrekturwerte wird der Phasenregelkreis als PI-Regler aufgefaßt. Basierend auf den bekannten Grundsätzen für diesen Reglertyp lassen sich eine Vielzahl von Programmierungsmöglichkeiten für den Festwertspeicher finden, die gegebenenfalls speziell an bestimmte Anwendungsfälle besonders angepaßt sind. Hier soll das Prinzip anhand einer der Möglichkeiten erläutert werden. Man kann der Berechnung des neuen Ladewertes als Anfangswert ANF die Beziehung (3) zugrundelegen:

(3) $ANF = (FWist - FWsoll) \cdot p + LW$

Dabei ist:

FWist der Istwert der Phasenlage des aktuellen Flußwechsels,

FWsoll der entsprechende Sollwert,

p der "P"-Verstärkungsfaktor mit $1/12 < p < 1$ und

LW der aktuelle Ladewert des Zählers.

Die angegebene Variationsbreite für die P-Verstärkung ergibt sich daraus, daß der Regler jenseits der Obergrenze instabil und andererseits jenseits der Untergrenze zu träge würde.

Für einen korrigierten Frequenzwert, der in das Frequenzregister 116 geladen wird, gilt in Analogie die Beziehung (4):

(4) $[FREG] = (FWist - FWsoll) \cdot i + [FREG]akt$

Dabei ist:

i der "I"-Verstärkungsfaktor und

[FREG]akt der aktuelle Inhalt des Frequenzregisters.

Aus den bekannten Grundsätzen für PI-Regler läßt sich ableiten, daß sich basierend auf dem diesem Reglerkonzept für den digitalen Phasenregelkreis eine Vielzahl von Regelfunktionen, die beliebig komplex sein können, insbesondere auch deswegen realisieren läßt, weil die Stellgrößen für den Regelkreis als individuell errechnete Werte in einem programmierbaren Festwertspeicher gespeichert sind. So ist es beispielsweise denkbar, kleine Verstärkungsfaktoren bei großen Abweichungen von einer Sollage zu verwenden, um den Regelkreis zu stabilisieren. Wiederum lassen sich Mindeststellgrößen bei kleinen Ablagen, aber auch bei der Verwendung von kleinen Verstärkungsfaktoren einführen.

Im gegebenen Anwendungsfall des digitalen Phasenregelkreises zur Wiedergewinnung des Lesetaktes bei Lesedaten bei Magnetschichtspeichern ist es weiterhin denkbar, auch noch weiterführende Störeinflüsse im Lesesignal in die Regelung einzubeziehen. Dies gilt beispielsweise auch für den Spitzenversatz (peak shift) des Lesesignals. Ausgehend davon, daß für mehrere parallele Datenspuren jeweils eine solche Phasenregelung vorgesehen ist, wäre es bei Verwendung einer entsprechenden schnellen Schaltkreistechnik auch möglich, die Stellgrößen für mehrere Spuren aus einem gemeinsamen Festwertspeicher zu entnehmen.

Darüber hinaus kann auch versucht werden, defekte Spuren noch zu lesen, indem man den Inhalt des Frequenzregisters 116 einer intakten parallelen Spur für die defekte Spur übernimmt. Schließlich ist es dem Fachmann geläufig, daß auch der programmierbare Festwertspeicher selbst nur eine Ausführungsform für die Bereitstellung externer Stellgrößen darstellt. Zum Erzeugen der Stellgrößen könnte ebenso ein sequentielles Schaltwerk z. B. basierend auf einem programmierbaren logischen Netzwerk verwendet werden.

Um schließlich das Bild abzurunden, sei nochmals auf das oben angenommene Beispiel mit einem aufgetretenen Phasenfehler von - 2,5 zurückgekommen. Aufgrund der Beziehungen (3) und (4) läßt sich mit den Annahmen dieses Beispiels unter Zugrundelegung eines P-Verstärkungsfaktors $p = 0,4$ bzw. eines I-Verstärkungsfaktors $i = 0,8$ ein neuer Anfangswert $ANF = 7$ bzw. ein neuer Frequenzwert $[FREG] = 30$ errechnen. Aufgrund der Beziehung (2a) ergibt sich damit ein neuer Sollwert für die Phasenlage FWsoll = 19,25.

In der einleitenden Beschreibung des digitalen Phasenregelkreises aufgrund des in Fig. 1 dargestellten Blockschaltbildes wurde versucht, ohne zunächst schaltungsmäßige oder funktionelle Einheiten zu erläutern, die Grundlage für ein allgemeines Verständnis des digitalen Phasenregelkreises zu schaffen. Auf dieser Grundlage soll nun im folgenden anhand der weiteren Figuren eine Ausführungsform des digitalen Phasenregelkreises näher erläutert werden.

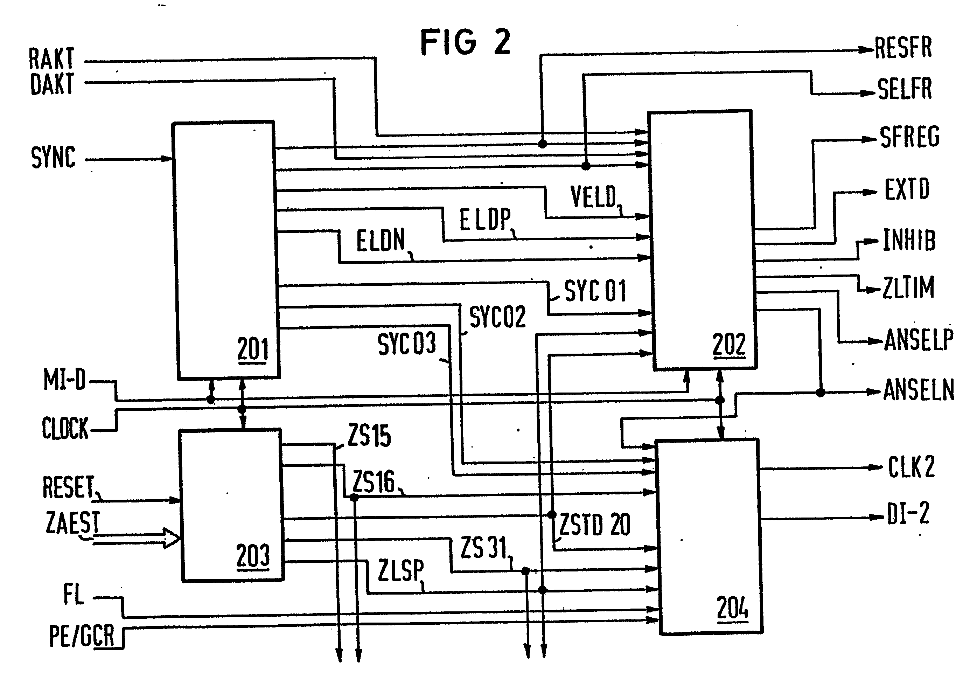

Wesentlich ist dabei vor allem das Zusammenwirken der bisher noch nicht erläuterten Steuerlogik 118 mit den übrigen Funktionseinheiten des Phasenregelkreises. Wegen der Komplexität der Steuerlogik 118 ist diese zunächst in einem weiteren Blockschaltbild in Fig. 2 etwas detaillierter dargestellt. Dieses Blockschaltbild dient im wesentlichen dazu, Schaltungsverbindungen für Daten- und Steuersignale darzustellen, die im übrigen im einzelnen im Zusammenhang mit den jeweiligen Funktionsblöcken näher erläutert werden.

Fig. 2 zeigt darüber hinaus vier Funktionseinheiten der Steuerlogik 118, nämlich ein Synchronisierungsnetzwerk 201, einen Fenstergenerator 202, einen Zustandsgenerator 203 und ein Datenausgabenetzwerk 204. Die von außen der Steuerlogik 118 zugeführten Daten- bzw. Steuersignale und die abgegebenen Signale sind im wesentlichen bereits einleitend im Zusammenhang mit der Beschreibung von Fig. 1 grundsätzlich erläutert, im übrigen wird auf die folgende Detailerläuterung verwiesen.

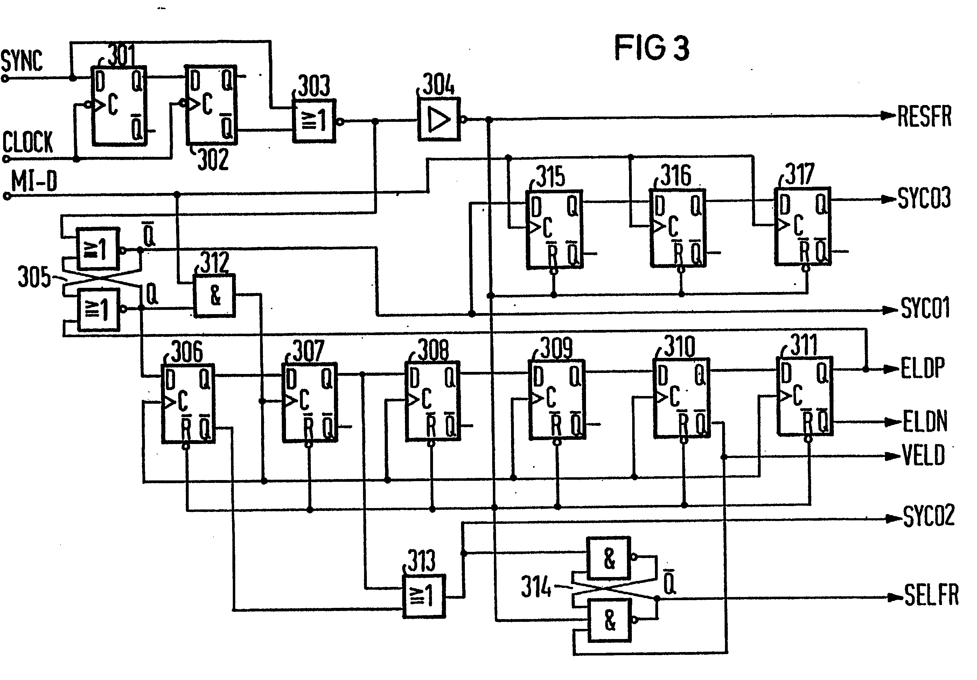

In Fig. 3 ist nun das Synchronisierungsnetzwerk 201 im einzelnen dargestellt. Die enleitende Beschreibung hat sich auf das Prinzip der Phasenkorrektur konzentriert und dabei nicht erläutert, wie sich der Phasenregelkreis zu Beginn eines neuen Lesevorganges verhält. Bei Magnetschichtspeichern, insbesondere Magnetbandspeichern ist allgemein eine Formatierung der gespeicherten Daten in Datenblöcke üblich und Daten werden vom Bandspeicher auch in Blöcken ausgelesen. Jeder Datenblock enthält eine Präambel, in der Gruppen definierter Lesesignale zum Zwecke der elektronischen Synchronisierung aufgezeichnet sind. Diese Formatierung ermöglicht ein schnelles Einphasen des Phasenregelkreises unter Steuerung des in Fig. 3 dargestellten Synchronisierungsnetzwerkes 201.

Ein Synchronisierungsvorgang wird durch ein Synchronisationssignal SYNC, also einem der von der zentralen Steuerung 105 (Fig. 1) zugeführten Steuersignale eingeleitet. Im Prinzip wird bei dem Synchronisationsvorgang aus der in der Präambel eines Datenblockes enthaltenen kontinuierlichen Folge von Datensignalen die Augenblicksfrequenz des Datenstromes abgeleitet und damit das Frequenzregister 116 geladen.

Im Ausführungsbeispiel ist, wie noch gezeigt wird, dieses Frequenzregister als ladbarer Binärzähler ausgebildet. Dies ermöglicht, das Frequenzregister 116 während des Synchronisierungsvorganges in einem Zählermodus zu betreiben, d. h. für eine vorbestimmte Teilfolge von Datensignalen der Präambel den Zeitraum festzustellen, in dem sie auftritt. Damit soll erreicht werden, daß am Ende des Sychronisationsvorganges im Frequenzregister 116 ein Wert enthalten ist, der bei der aktuellen Bandgeschwindigkeit dem dann gültigen Ladewert des Zählers 110 entspricht.

Praktisch bedeutet dies, daß im Frequenzregister 116 zu einem bestimmten Zeitpunkt der Zählermodus aktiviert wird, der durch den Systemtakt CLOCK gesteuert wird. Nach einer Anzahl von Synchronisationszyklen wird der Zählermodus deaktiviert und dann soll im Frequenzregister der der Augenblicksfrequenz des Datenstromes entsprechende Wert enthalten sein.

Basierend auf der erläuterten Beziehung (1) läßt sich dies allgemein mit der Gleichung (5) ausdrücken:

(5) $[FREG]_{syn} = k (FREG_{max} + 1) - mAB = n (ZAE_{max} + 1 - AB)$

Dabei ist:

$[FREG]_{syn}$ der Inhalt des Frequenzregisters am Ende des Synchronisationsvorganges,

k ein Multiplikator, der mögliche Überläufe des Frequenzregisters im Zählermodus berücksichtigt,

m die Anzahl der Synchronisationszyklen bzw. die Zahl der Elemente der Teilfolge der Datensignale.

Die Bedeutung der übrigen Größen ergibt sich aus der Erläuterung zu Gleichung (1). Aus der Forderung, daß der Zähler 110 mit Werten zwischen "0" und "15" geladen werden kann und der n-fache Ladewert den Inhalt des Frequenzregisters bildet, ergibt sich weiterhin allgemein die Beziehung (6):

(6) $i . (ZAE_{max} + 1) = FREG_{max} + 1$

mit i als Multiplikator.

Damit läßt sich die Beziehung (5) umformen in:

(5a) $ki (ZAE_{max} + 1) - mAB = = n (ZAE_{max} + 1) - nAB$.

Diese Beziehung ist sicherlich unter anderem erfüllt falls $m = n = k . i$. Im Ausführungsbeispiel ist $n = 4$ angenommen, damit enthält das Frequenzregister im Zählermodus erstmals nach vier aufeinanderfolgenden Datensignalen bzw. aus diesen abgeleiteten Markierimpulsen MI den aktuellen, dem Ladewert korrespondierenden Frequenzwert, wobei zwischendurch einmal ein Registerüberlauf auftritt. Denn aus der Festlegung des maximalen Ladewertes für den Zähler 110 und der des Multiplikators $n = 4$ läßt sich ohne weiteres ableiten, daß vorzugsweise gilt $i = 2$ und damit ebenso $k = 2$.

Wie in Fig. 3 gezeigt ist, läßt sich dies nun schaltungstechnisch so realisieren, daß zunächst das Synchronisationssteuersignal SYNC über zwei bezüglich ihrer Dateneingänge in Serie geschaltete D-Flipflops 30l bzw. 302 mit dem Systemtakt CLOCK bewertet wird. Dabei sind der Dateneingang des ersten D-Flipflops 301 und der inverse Ausgang Q̄ des zweiten D-Flipflops 302 über ein NOR-Glied 303 logisch verknüpft. Wenn das Synchronisationssteuersignal SYNC ein Niedrigpegelsignal ist, erscheint am Ausgang des NOR-Gliedes 303 für die Länge einer Periode des Systemtaktes CLOCK ein bewertetes Synchronisationssignal mit hohem Pegel. Dieses Signal wird durch einen Inverter 304 in ein Rücksetzsignal RESFR für das Frequenzregister 316 umgesetzt, das einen Systemtakt CLOCK lang ist.

Das am Ausgang des NOR-Gliedes 303 abgegebene bewertete Synchronisationssignal wird weiterhin einem RS-Flipflop 305 als Setzsignal zugeführt und damit das Synchronisierungsnetzwerk aktiviert, d. h. am Setzausgang Q dieses RS-Flipflops ein Freigabesignal abgegeben. Dazu invers ist ein Steuersignal SYC01, das dem Fenstergenerator 202 zugeführt wird.

Ein wesentlicher Teil des Synchronisierungsnetzwerkes 201 ist nun eine Kette von D-Flipflops 306 bis 311, die nach Art eines Schieberegisters aufgebaut und deren Rücksetzeingänge gemeinsam an den Ausgang des Inverters 304 angeschlossen sind. Der Schiebetakt für diese Kette von D-Flipflops 306 bis 311 wird aus den vom Schieberegister 114 abgegebenen verzögerten Markierimpulsen MI-D abgeleitet. Dazu ist ein UND-Glied 312 vorgesehen, das diese verzögerten Markierimpulse, gesteuert durch das Freigabesignal am Ausgang des RS-Flipflops 305, durchschaltet. Dieses Freigabesignal ist außerdem dem Dateneingang D des ersten D-Flipflops 306 dieser Kette zugeführt. Damit wird nach der Freigabe des Synchronisierungsnetzwerkes, d. h. im gesetzten Zustand des RS-Flipflops 305 im Takt der auftretenden verzögerten Markierungsimpulse MI-D eine logische "1" durch diese Kette von D-Flipflops 306 bis 311 geschoben.

Mit dem ersten Markierungsimpuls nach dem Rücksetzen der D-Flipflops 306 bis 311 schaltet das D-Flipflop 306 um. Ein an seinen inversen Ausgang Q̄, sowie an den Normalausgang des nächsten D-Flipflops 307 angeschlossenes ODER-Glied 313 wird damit bis zum Eintreffen des nächsten verzögerten Markierungsimpulses MI-D gesperrt. Am Ausgang dieses ODER-Gliedes wird ein zweites abgeleitetes Synchronisationssteuersignal SYC02 abgegeben, dessen abfallende Flanke den Anfang des Zählerbetriebs im Frequenzregister 116 kennzeichnet.

Zugleich wird mit diesem Synchronisationssignal SYC02 ein weiteres RS-Flipflop 314 gesetzt, dessen Rücksetzausgang Q̄ damit ein Steuersignal mit Niedrigpegel abgibt. Dieses Signal ist ein Auswahlsignal SELFR für das Frequenzregister 116. Es aktiviert den Zählermodus im rückgesetzten Zustand bzw. gibt den normalen Registerbetrieb bei hohem Pegel frei.

Nach dem fünften, während der Synchronisierung auftretenden verzögerten Markierungsimpuls MI-D ist das D-Flipflop 310 gesetzt. Dieser Zustand tritt also vier Bitzellen nach dem Beginn des Zählerbetriebes auf und kennzeichnet sein Ende. Ein entsprechendes weiteres Steuersignal VELD, abgenommen vom inversen Ausgang des D-Flipflops 310, kennzeichnet diesen Zeitpunkt. Nach einer weiteren Bitzelle ist auch das letzte D-Flipflop 311 dieser Kette gesetzt und erzeugt an seinen beiden Ausgängen zueinander inverse verzögerte Steuersignale ELDP bzw. ELDN, die das Ende des Synchronisierbetriebes kennzeichnen. Diese drei letztgenannten Signale werden unter anderem dem Fenstergenerator 202 zugeführt.

Zu diesem Zeitpunkt ist der Phasenregelkreis synchronisiert, wie noch am Frequenzregister 116 im Detail gezeigt wird. Mit dem positiven verzögerten Steuersignal ELDP für das Ende des Zählerbetriebes wird nun das RS-Flipflop 305 rückgesetzt, während eine Bitzelle früher bereits mit dem Steuersignal VELD das RS-Flipflop 314 rückgesetzt wurde.

Es bleibt zu ergänzen, daß damit eine zweite Kette von D-Flipflops 315 bis 317 dadurch aktiviert wird, daß dem Dateneingang D des ersten Flipflops dieser Kette das positive verzögerte Steuersignal ELDP zugeführt wird. Auch für diese D-Flipflops bilden die verzögerten Markierungsimpulse MI-D den Schiebetakt, so daß nach drei weiteren Bitzellen am Ausgang des letzten D-Flipflops dieser zweiten Kette ein drittes abgeleitetes Synchronisationssignal SYC03 mit positivem Signalpegel erscheint, das dem Datenausgabenetzwerk 204 zugeführt wird.

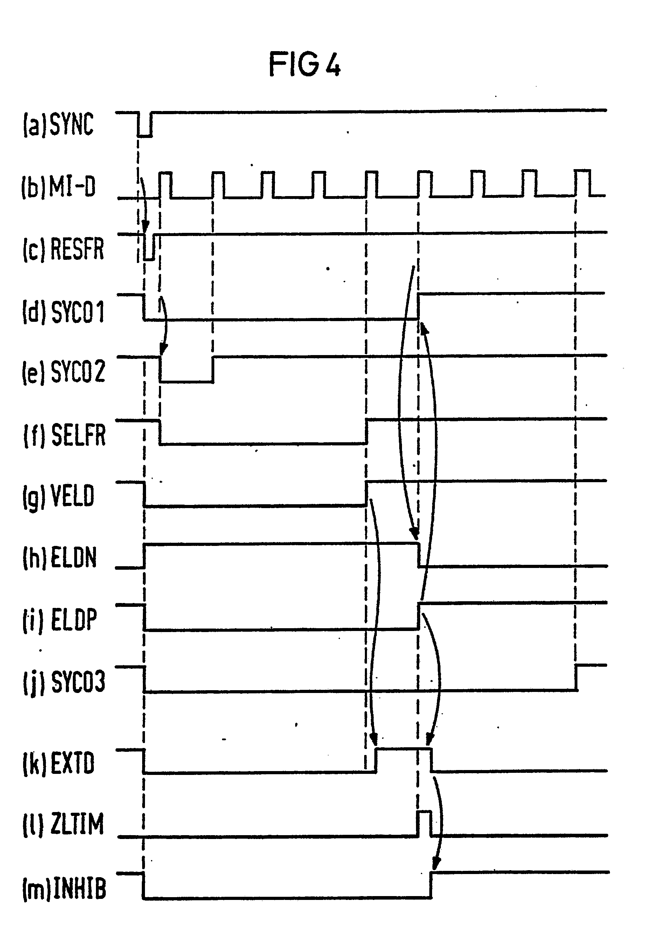

In Fig. 4 sind nun die oben beschriebenen Signale als Impulsdiagramm schematisch dargestellt. Die Zeilen (a) und (b) zeigen das Synchronisationssignal SYNC bzw. die verzögerten Markierimpulse MI-D. Aus Zeile (c) geht das aus dem Sychronisationssignal SYNC abgeleitete Rücksetzsignal RESFR hervor. Das erste, zweite und dritte abgeleitete Synchronisationssiganl SYN01, SYC02 bzw. SYC03 sind in Zeilen (d), (e) bzw. (j) dargestellt. Zeile (f) illustriert das Auswahlsignal SELFR. Zeilen (g), (h) und (i) zeigen die Steuersignale VELD, ELDN bzw. ELDP für das Ende des Zählerbetriebs. Die Impulsdarstellung läßt Laufzeitverzerrungen u. ä. aus Gründen der Übersicht unbeachtet und der Zusammenhang zwischen steuernder und gesteuerter Impulsflanke ist, soweit wünschenswert, durch Pfeile angedeutet. Weitere, in Fig. 4 enthaltene Signalformen sollen im gegebenen Zusammenhang später behandelt werden.

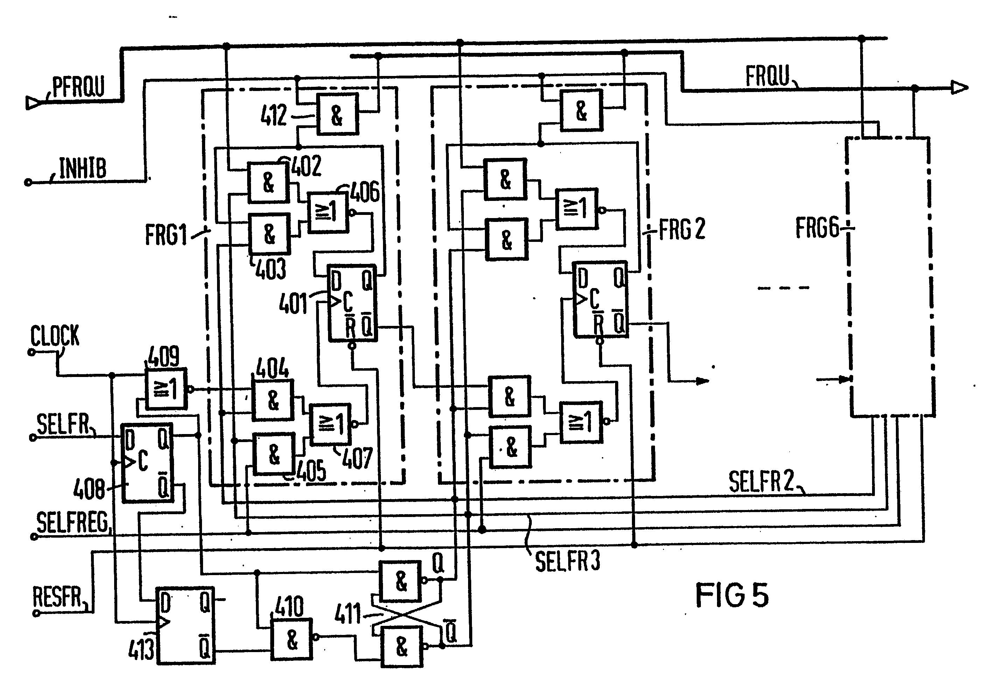

Nach dieser Funktionsbeschreibung des Synchronisierungsnetzwerkes 201 erscheint es nun sinnvoll, den Aufbau des Frequenzregisters 116 anhand von Fig. 5 zu erläutern. Es besteht aus sechs gleichartig aufgebauten Registerstufen FRG1 bis FRG6, die so ausgestaltet sind, daß das Register einen sechsstufigen, voreinstellbaren und rückwärts zählenden Binärzähler bildet. Jede Registerstufe enthält ein D-Flipflop 401. Um die beiden Betriebsweisen Speichermodus und Zählermodus zu selektieren, sind einem Dateneingang D bzw. einem Takteingang C des D-Flipflops 401 jeweils logische Netzwerke mit zwei UND-Gliedern 402, 403 bzw. 404, 405 und je einem nachgeordneten NOR-Glied 406 bzw. 407 zugeordnet. In jedem Modus wird pro Netzwerk eines der beiden UND-Glieder angesteuert. Damit wird in dem einem Netzwerk entweder das entsprechende Bit eines über den Ladebus PFRQU zugeführten Frequenzwertes (Speicherbetrieb) oder der Normalausgang Q des D-Flipflops 401 auf seinen Dateneingang D (Zählermodus) durchgeschaltet. Im anderen Netzwerk wird entweder ein noch zu erläuterndes Ladesteuersignal SFREG (Speicherbetrieb) oder der Systemtakt CLOCK bzw. gegebenenfalls das am inversen Ausgang Q̄ der jeweils niederwertigeren Registerstufe anstehende Signal (Zählerbetrieb) auf den Takteingang C durchgeschaltet.

Die entsprechenden Auswahlsignale SELFR2 für den Zählermodus bzw. SELFR3 für den Speichermodus werden aus dem von dem Synchronisierungsnetzwerk 201 abgegebenen Auswahlsignal SELFR abgeleitet. Dieses wird dem Dateneingang eines weiteren D-Flipflops 408 zugeführt, das mit dem Systemtakt CLOCK gesetzt wird. Der Ausgang Q dieses Flipflops ist einerseits an ein weiteres NOR-Glied 409 angeschlossen, das damit im Zählermodus den am zweiten Eingang empfangenen Systemtakt CLOCK auf die erste Registerstufe FRG1 durchschaltet. Andererseits ist dieser Ausgang Q mit je einem Eingang eines weiteren NAND-Gliedes 410 und eines weiteren RS-Flipflops 411 verbunden. Der inverse Ausgang des D-Flipflops 408 ist über ein durch den Systemtakt CLOCK getaktetes weiteres D-Flipflop 413 verzögert und invertiert mit dem zweiten Eingang des NAND-Gliedes 410 und über dessen Ausgang mit dem zweiten Eingang des RS-Flipflops 411 verbunden.

Wie oben beschrieben, wird zu Beginn des Synchronisierungsvorganges vom Synchronisierungsnetzwerk des Rücksetzsignal RESFR erzeugt. Dieses setzt alle D-Flipflops 401 der Registerstufen FRG1 bis FRG6 zurück. Sobald nun mit dem Beginn des Zählermodus die negative Flanke des Auswahlsignales SELFR auftritt, gibt das D-Flipflop 408 an seinem Ausgang Q mit dem Auftreten des nächsten Systemtaktes CLOCK ein Signal mit Niedrigpegel ab. Das Frequenzregister 116 tritt damit in den Zählermodus ein und zählt nun, mit dem Systemtakt CLOCK getaktet, rückwärts von 0 bzw. dem Übertragswert 64, da nun auch das RS-Flipflop 411 gesetzt ist, d. h. das abgeleitete Auswahlsignal SELFR2 die entsprechenden UND-Glieder 404 in den Registerstufen freigibt.

Bei Nenngeschwindigkeit des Magnetbandes fällt der nächste verzögerte Markierungsimpuls MI-D mit dem Zählerstand 63 - 24 = 39 und der übernächste Markierungsimpuls mit dem Zählerstand "15" zusammen. Zwischen diesem und dem dritten verzögerten Markierungsimpuls MI-D geht der Zählerstand durch Null und erreicht beim dritten Markierungsimpuls MI-D den Wert "56". Durch einfaches Abzählen läßt sich weiter unmittelbar erkennen, daß beim vierten verzögerten Markierungsimpuls MI-D schließlich ein Zählwert von "32" im Frequenzregister 116 erreicht ist. Zu diesem Zeitpunkt gibt das Synchronisierungsnetzwerk 201 das Steuersignal VELD für das Ende des Zählerbetriebes ab. Dieses bewirkt - wie beschrieben - die Zustandsänderung des Auswahlsignales SELFR und bewertet mit dem Systemtakt das Rücksetzen des RS-Flipflops 411. Damit ist das Frequenzregister nunmehr wieder auf den Speichermodus eingestellt.

In diesem Betriebszustand sind die UND-Glieder 402 bzw. 405 der Registerstufen FRG1 bis FRG6 freigegeben, so daß ein über den Ladebus PFRQU übertragener neuer Frequenzwert, gesteuert durch das Ladesteuersignal SFREG in das Register übernommen werden kann. Der Vollständigkeit halber ist zu erwähnen, daß in den Registerstufen FRG1 bis FRG6 außerdem jeweils ein weiteres UND-Glied 412 mit einem Eingang an den Ausgang Q des D-Flipflops 401 und mit seinem zweiten Eingang an eine Steuerleitung angeschlossen ist, die ein Sperrsignal INHIB führt, das noch erläutert wird. Das UND-Glied 412 ist - wie schematisch angedeutet - an jeweils eine Leitung des Ausgangsbusses FRQU des Frequenzregisters 116 angeschlossen und schaltet im deaktivierten Zustand des Sperrsignales INHIB das entsprechende Ausgangssignal des D-Flipflops 401 auf die entsprechende Busleitung durch.

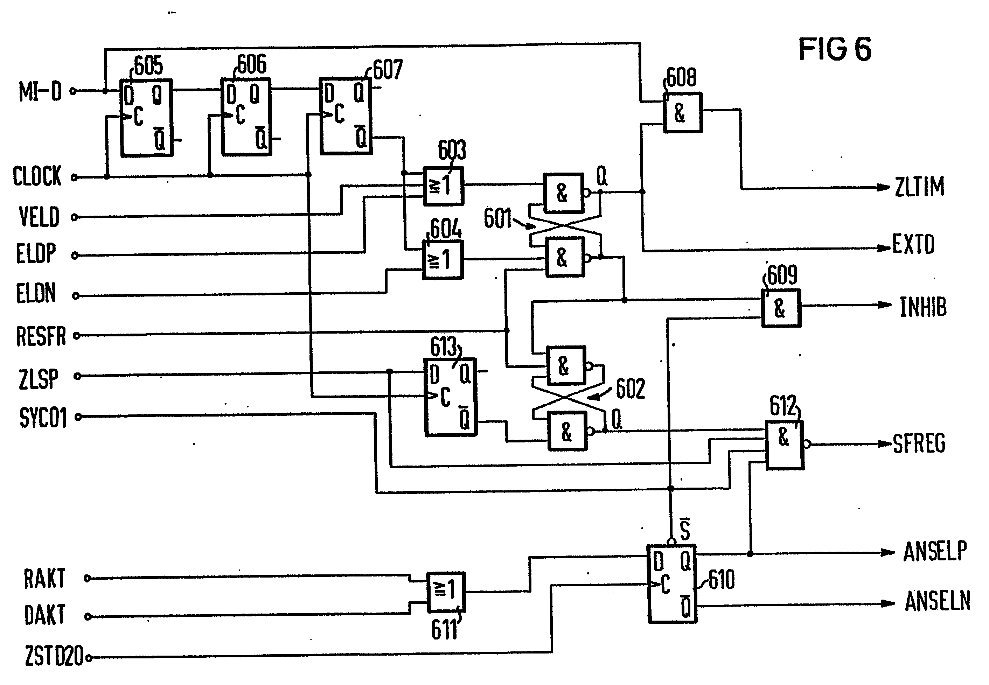

In Fig. 6 ist nun die Detailschaltung für den Fenstergenerator 202 der Steuerlogik des Phasenregelkreises im Detail dargestellt. Mit dem Fenstergenerator werden aus ihm zugeführten Steuersignalen Zeitsteuersignale erzeugt, die bestimmte Abläufe im Phasenregelkreis synchron zum Zählerzyklus einleiten.

Der Fenstergenerator enthält zwei RS-Flipflops 601 bzw. 602, die zu Beginn des beschriebenen Synchronisierungsvorganges mit dem vom Synchronisierungsnetzwerk 201 abgegebenen Rücksetzsignal RSFR zurückgesetzt werden, d. h. ihre mit Q bezeichneten Ausgänge haben dann niedrigen Pegel. Dem Setzeingang und dem Rücksetzeingang des einen RS-Flipflops 601 ist je ein ODER-Glied 603 bzw. 604 zugeordnet.

Im Fenstergenerator 202 werden die von dem Schieberegister 114 abgegebenen verzögerten Markierimpulse MI-D durch eine Kette von drei D-Flipflops 605 bis 607, gesteuert durch den Systemtakt CLOCK, geschoben. Der inverse Ausgang $\bar{Q}$ des letzten D-Flipflops 607 dieser Kette ist mit je einem der Eingänge der ODER-Glieder 603 bzw. 604 verbunden. Darüber hinaus sind dem einen ODER-Glied 603 über weitere Eingänge die Steuersignale VELD und ELDP für den Zählerbetrieb zugeführt. Das andere ODER-Glied 604 ist das invertierte Steuersignal ELDN zugeführt. Aus den Impulsdiagrammen von Fig. 4 wird deutlich, daß das angeschlossene RS-Flipflop 601 solange rückgesetzt bleibt, bis am Ende des Zählerbetriebes das Steuersignal VELD den Signalzustand ändert und anschließend der inverse Ausgang $\bar{Q}$ des D-Flipflops 607 einen niedrigen Pegelwert annimmt. Dieser gesetzte Zustand des RS-Flipflops 601 bleibt für eine Bitzelle erhalten, da erst dann die beiden verzögerten Steuersignale ELDP bzw. ELDN den Signalzustand ändern.

Am normalen Ausgang Q des RS-Flipflops 601 wird das Zeitsteuersignal EXTD abgegeben, das in Zeile (k) von Fig. 4 dargestellt ist und dem Zähler 110 zugeführt wird. Dieses Signal hat hohen Pegel zwischen dem Ende des Zählermodus, wie im Zusammenhang mit der Beschreibung des Synchronisierungsnetzwerkes 201 anhand von Fig. 3 erläutert, und der Bewertung des nächsten verzögerten Markierungsimpulses MI-D. Nur während dieses Zeitfensters wird das Zeitsteuersignal "Zähler laden", in Fig. 6 mit ZLTIM bezeichnet, über ein weiteres UND-Glied 608 erzeugt, das die verzögerten Markierimpulse mit diesem Zeitsteuersignal EXTD logisch verknüpft.

Auch das im Zusammenhang mit der Beschreibung des Frequenzregisters 116 bereits erwähnte Sperrsignal INHIB wird aus den beschriebenen Zuständen des RS-Flipflops 601 abgeleitet. Dazu wird der Zustand seines inversen Ausganges $\bar{Q}$ über ein weiteres UND-Glied 609 mit dem ersten abgeleiteten Synchronisationssteuersignal SYC01 logisch verknüpft. Dieses Sperrsignal ist in Zeile (m) von Fig. 4 dargestellt, so daß nun deutlich wird, daß die Registerausgänge des Frequenzregisters 116 und des Multiplexers 122 während des Synchronisationsvorganges - wie beschrieben - gesperrt sind, d. h., daß am Festwertspeicher 124 die Adresse 0 anliegt.

Der Fenstergenerator 202 erzeugt außerdem zwei zu einander inverse Auswahlsignale ANSELP bzw. ANSELN für den Zählermultiplexer 126, die von einem weiteren D-Flipflop 610 abgegeben werden. Ist das erste dieser beiden Signale im Zustand "1", dann schaltet der Zählermultiplexer 126 über den Ladebus PZAE einen aus dem Festwertspeicher 124 ausgelesenen korrigierten Anfangswert als neuen Ladewert durch. Im anderen Signalzustand wird der Inhalt des Frequenzregisters 116 als Ladewert zum Zähler 110 übertragen.

Wie eingangs erläutert, werden vom Speicherregister 112 bzw. vom Zwischenspeicherregister 120 zwei Steuersignale RAKT bzw. DAKT abgegeben, die den aktiven Zustand des jeweiligen Registers kennzeichnen. Im Fenstergenerator 202 werden diese beiden Signale über ein weiteres ODER-Glied 611 miteinander verknüpft und dem D-Eingang des D-Flipflops 610 zugeführt. Damit wird diesem Flipflop immer dann eine logische "1" angeboten, wenn nur eines der beiden Regiser belegt ist, d. h. während der laufenden Bitzelle ein Flußwechsel festgestellt wurde. Taktsignal für dieses D-Flipflop 610 ist eines der Zyklussignale, die vom noch zu beschreibenden Zustandsgenerator 203 erzeugt werden. Im vorliegenden Fall spezifiziert das Zyklussignal ZST20 den Zustand "20" des Zählers 110. Das D-Flipflop 610 wird außerdem über das erste abgeleitete Synchronisationssignal SYC01 während des gesamten Synchronisationsvorganges im gesetzten Zustand gehalten.

Schließlich erzeugt der Fenstergenerator 202 das Ladesteuersignal SFREG für das Frequenzregister 116 als Ausgangssignal eines weiteren NAND-Gliedes 612. Zwei seiner vier Eingänge sind mit dem Ausgang Q des oben erwähnten zweiten RS-Flipflops 602 bzw. mit dem normalen Ausgang Q des D-Flipflops 610 verbunden. Einem dritten Eingang ist das erste abgeleitete Synchronisierungssignal SYC01 zugeführt und der vierte Eingang empfängt ein weiteres, von dem Zustandsgenerator 203 erzeugtes Zyklussignal ZLSP, das den Zählerzustand "Laden" kennzeichnet und die Ladevorgänge im Frequenzregister 116 bzw. im Zähler 110 steuert. Dieses Signal wird außerdem dem D-Eingang eines weiteren D-Flipflops 613 angeboten und mit dem Systemtakt CLOCK übernommen und infolgedessen das zweite RS-Flipflop 602 gesetzt. Zu diesem Zeitpunkt sind damit im einen synchronisierten Zustand des Phasenregelkreises alle Eingänge des NAND-Gliedes 612 auf hohem Pegel, falls auch das erste Auswahlsignal ANSELP für den Zählermultiplexer 126 auf hohem Pegel liegt. Damit sperrt das NAND-Glied 612, ändert aber seinen Zustand mit der Rückflanke des Zyklussignals ZLSP. Wie sich aus einem Vergleich mit Zeile (d) von Fig. 4 ergibt, tritt dieser beschriebene Vorgang nur im einen synchronisierten Zustand des Phasenregelkreises auf, da sonst das erste abgeleitete Synchronisierungssignal SYC01 das NAND-Glied 612 deaktiviert.

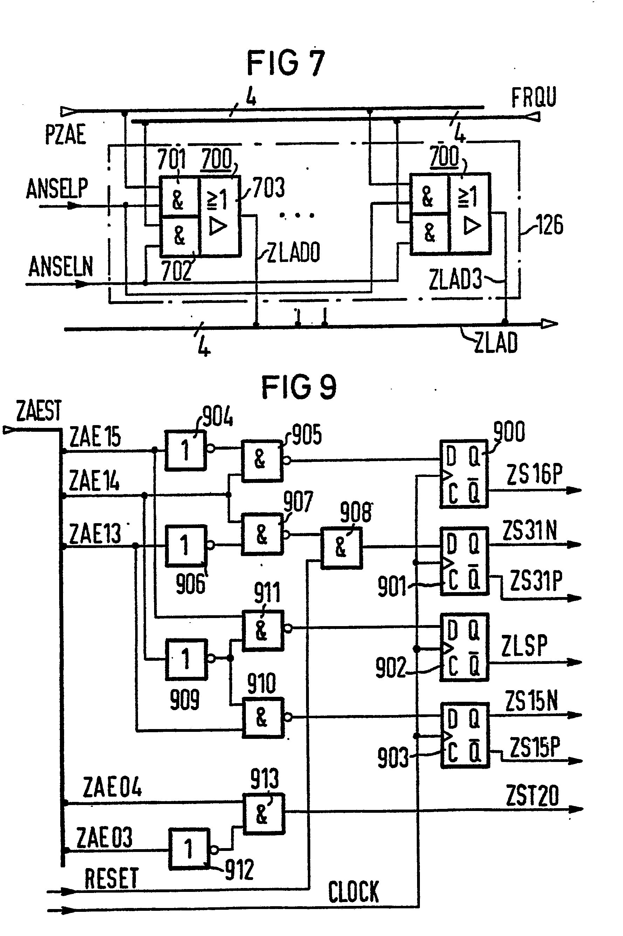

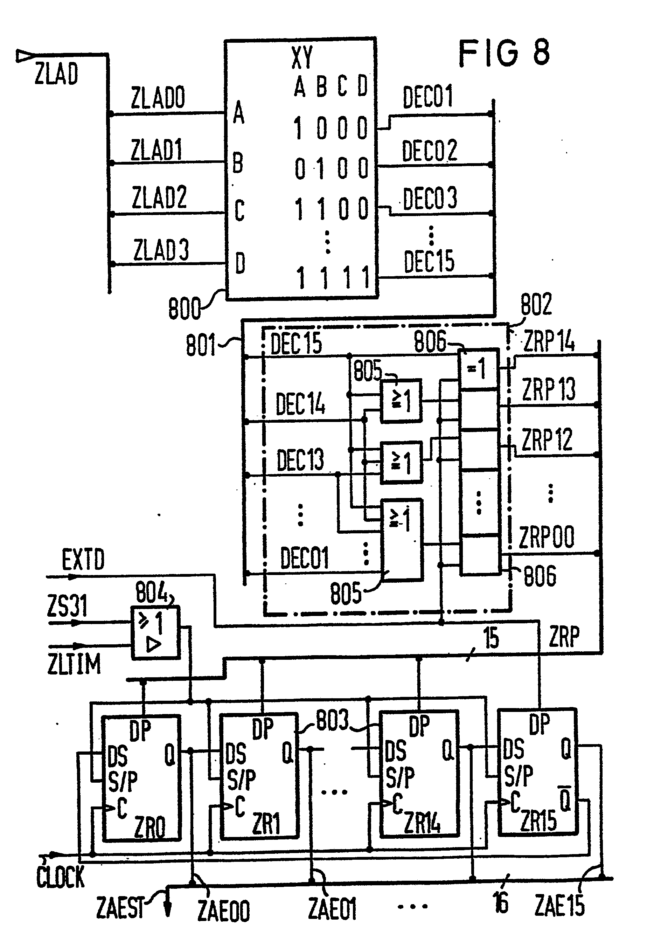

Damit sind die wesentlichen, den Zähler 110 steuernden und vom Fenstergenerator 202 erzeugten Steuersignale erläutert. Deshalb ist es nun zweckmäßig, den Schaltungsaufbau des Zählermultiplexers 126 und des Zählers 110 anhand von Fig. 7 bzw. 8 näher zu betrachten. In Fig. 7 ist der Zählermultiplexer 126 schematisch dargestellt, der eingangsseitig über die Ladebusse PZAE und FRQU an den Festwertspeicher 124 bzw. das Frequenzregister 116 angeschlossen ist. Beide Busse haben je vier Leitungen und der an sich konventionell aufgebaute Zählermultiplexer 126 enthält dementsprechend vier gleichartig aufgebaute, nur schematisch angedeutete Multiplexerstufen 700 mit zwei UND-Gliedern 701 bzw. 702 und einem nachgeschalteten ODER-Glied 703, das zugleich als Leistungsstufe ausgebildet ist. Jedes UND-Glied weist einen Eingang auf, dem eines der Auswahlsignale ANSELP bzw. ANSELN zugeführt ist. Der zweite Eingang jedes UND-Gliedes ist dann mit einer der Leitungen des zugeordneten Ladebusses PZAE bzw. FRQU verbunden. Auf diese Weise sind die einzelnen Leitungen eines der Ladebusse selektiv auf die Ausgänge der entsprechenden ODER-Glieder 703 unter Steuerung der Auswahlsignale auf den Ausgangsbus ZLAD des Zählermultiplexers 126 durchschaltbar.

Wie in Fig. 8 gezeigt, ist an diesen Ausgangsbus ZLAD im Zähler 110 ein Codeumsetzer 800 mit vier parallelen Eingängen angeschlossen, der in herkömmlicher Technik über einfache UND-Verknüpfungen aus den vierstelligen binären Eingangssignalen 15 Ausgangswerte decodiert, die mit DEC01 bis DEC15 bezeichnet sind. Wie eingangs erläutert, ist der Zähler 110 mit einem Anfangswert zwischen "1" und "15" ladbar, also entspricht jeder dieser Ausgangswerte des Codeumsetzers 800 einem spezifischen dieser Ladewerte.

Die 15 Ausgänge des Codeumsetzers 800 sind über eine Busleitung 801 an ein Ladenetzwerk 802 angeschlossen und dieses über eine weitere Busleitung ZRP mit 16 Registerstufen 803 des Zählers 110 verbunden. Aus Gründen der Übersicht sind in Fig. 8 nur vier dieser Registerstufen dargestellt. Die aus D-Flipflops aufgebauten Registerstufen 803 sind als Johnson-Zähler geschaltet, d. h. es ist jeder Datenausgang Q einer niederwertigeren Registerstufe z. B. ZR0 mit dem Dateneingang der nächsthöheren Registerstufe z. B. ZR1 verbunden und der inverse Datenausgang Q der höchstwertigen Registerstufe ZR15 ist auf den Dateneingang DS der niederwertigsten Registerstufe ZR0 zurückgeführt. Der Systemtakt CLOCK bildet den Schiebetakt für alle Registerstufen, die individuell über einen Ladeeingang DP voreingestellt werden, der an eine der Leitungen der Busleitung ZRP angeschlossen ist. Dies gilt mit Ausnahme der höchsten Registerstufe ZR15 deren Ladeeingang DP das Zeitsteuersignal EXTD zugeführt ist. Die parallele Übernahme der über die Busleitung ZRP den Registerstufen des Zählers 110 zugeführten Signale wird durch das Ausgangssignal eines weiteren ODER-Gliedes 804 gesteuert, das zugleich als Leistungsverstärkerelement ausgebildet ist. Den beiden Eingängen dieses ODER-Gliedes ist das Zeitsteuersignal ZLTIM bzw. das Zyklussignal ZS31 zugeführt.

Die beiden Zeitsteuersignale EXTD bzw. ZLTIM wurden vorstehend im Zusammenhang mit der Beschreibung des Fenstergenerators 202 erläutert und haben wie in Fig. 4 dargestellt, nur am Ende des Synchronisationsvorganges einen hohen Signalpegel. Beide Signale dienen also dazu, den Zähler 110 einzusynchronisieren.

Bekanntlich wird bei einem Johnson-Zähler in einem normalen Zählzyklus ohne einen voreingestellten Zählwert von der niedrigsten Registerstufe ausgehend mit jedem Zähltakt eine weitere Registerstufe mit einer logischen "1" aufgefüllt, bis alle Registerstufen gesetzt sind. Im vorliegenden Fall ist dies beim Zählwert "16" der Fall, wenn die Zählung mit dem Wert "0" beginnt.

Danach werden von dem inversen Ausgang Q der höchsten Registerstufe laufend Nullpegelsignale an den Dateneingang DS der niedrigsten Registerstufe abgegeben, also alle Registerstufen schrittweise wieder rückgesetzt. Beim höchsten Zählerstand, im vorliegenden Fall also dem Zählwert "31" entsprechend, steht dann wiederum nur noch in der höchsten Registerstufe eine logische "1".

Damit ist erklärt, daß der Zähler 110 zum Zeitpunkt des Auftretens des Zeitsteuersignales ZLTIM über das weitere Zeitsteuersignal EXTD in Zusammenwirken mit den Antivalenzgliedern 806 aus Fig. 8 mit dem um 16 erhöhten Wert, der an dem Ladebus PZAE anliegt, geladen wird. Während des stationären Betriebes des Phasenregelkreises dagegen ist das Zeitsteuersignal EXTD ein Niedrigpegelsignal und der Zähler 110 wird über das Ladenetzwerk 802 mit den Zählwerten "0" bis "15" geladen.

Dazu ist das Ladenetzwerk 802 so ausgebildet, daß es die Ausgangswerte DEC01 bis DEC15 des Codeumsetzers 800 in entsprechender Weise miteinander logisch verknüpft. Aus der obigen zusammenfassenden Erläuterung des Johnson-Zählers läßt sich ohne weiteres für den gegebenen Anwendungsfall ableiten, daß die Registerstufe ZR14 des Zählers nur dann, wenn der Ladewert "15" geladen werden soll, gesetzt werden darf. Daraus ergibt sich, daß aus dem Ausgangswert DEC15 des Codeumsetzers, der diesen Ladewert spezifiziert, unmittelbar ein Ladesignal ZRP14 abzuleiten ist. Die nächstniedrigere Registerstufe ist bei den Ladewerten "14" und "15" zu setzen. Deshalb bietet es sich an, im Ladenetzwerk 802 hier für diesen Fall die beiden Ausgangswerte DEC15 und DEC14 über eines der ODER-Glieder 805 im Ladenetzwerk 803 miteinander logisch zu verknüpfen und daraus das entsprechende Ladesignal ZRP13 für die nächstniedrigere, in Fig. 7 nicht mehr dargestellte Registerstufe ZR13 abzuleiten. Dies läßt sich in allgemein gültiger Form schematisch fortsetzen bis zur niedrigsten Registerstufe ZR0, die mit einem Ladesignal ZRP00 bei jedem der Ladewerte "1" bis "15" gesetzt werden muß.

Das Ladenetzwerk 802 enthält nun insofern noch eine Besonderheit, als eine Reihe von Antivalenzgliedern 806 vorgesehen ist. Deren Ausgänge bilden jeweils einen der Ausgänge des Ladenetzwerkes 802, die jeweils eines der Ladesignale ZRP00 bis ZRP14 abgeben. Die ersten Eingänge aller Antivalenzglieder 806 ist parallel das Zeitsteuersignal EXTD zugeführt. Die zweiten Eingänge der Antivalenzglieder sind jeweils mit dem Ausgang eines der ODER-Glieder 805 verbunden, mit Ausnahme des obersten Antivalenzgliedes, dem an seinem zweiten Eingang direkt der Ausgangswert DEC15 des Codeumsetzers 800 zugeführt ist.

Diese Exklusiv-ODER-Verknüpfung der Ausgangssignale der ODER-Glieder 805 mit dem Zeitsteuersignal EXTD bedeutet, daß nur dann ein nicht invertierter Signalzustand am Ausgang eines entsprechenden ODER-Gliedes 805 auf die Busleitung ZRP durchgeschaltet wird, wenn das Zeitsteuersignal EXTD ein Nullpegelsignal ist. Dies ist der normale Zustand im stationären Betrieb des Phasenregelkreises. Am Ende des Synchronisationsvorganges hat das Zeitsteuersignal EXTD jedoch für die Länge einer Bitzelle einen hohen Signalpegel und invertiert damit alle Ausgänge des Ladenetzwerkes 802. Damit ist die gewünschte Funktion erreicht, daß zum Zeitpunkt des Eintreffens des Zeitsteuersignales ZLTIM der um 16 erhöhte Wert des aus dem Festwertspeicher 124, unter der Adresse 0, ausgelesene und über den Ladebus PZAE übertragene Wert geladen wird. Diese Maßnahme hat den Sinn, zum Zeitpunkt des fünften Auftretens des verzögerten Markierungsimpulses MI-D die Phasenlage auf einen mittleren Wert (z. B. 16 + 3 = 19) einzustellen.

Ausgangsleitung des Zählers 110 schließlich ist die Busleitung ZAEST, deren Leitungen jeweils mit dem Datenausgang Q einer der Zählerstufen 803 des Zählers 110 verbunden sind. Damit führt der Ausgangsbus ZAEST des Zählers 110 Zählerpositionssignale ZAE00 bis ZAE15, die den Zustand der entsprechenden Zählerstufen ZR0 bis ZR15 anzeigen, d. h. in ihrer Gesamtheit den aktuellen Zählerstand des Zählers 110 wiedergeben.

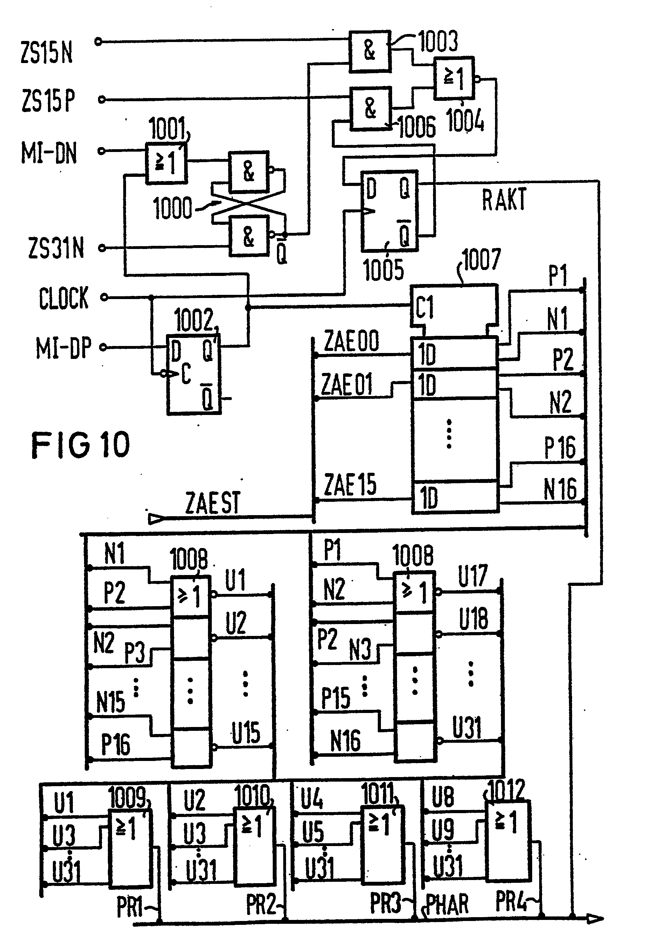

Dieser aktuelle Zählerstand des Zählers 110 wird nun unter anderem in dem Zustandsgenerator 203 der Steuerlogik ausgewertet, der in Fig. 9 näher dargestellt ist. Funktion des Zustandsgenerators ist es, synchron zum Systemtakt CLOCK zu bestimmten Zeiten Zyklussignale zu erzeugen, die den aktuellen Stand des Zählerzyklus wiederspiegeln. Allgemein wird das Einsynchronisieren auf den Systemtakt CLOCK wieder mit einer Gruppe von D-Flipflops 900 bis 903 erreicht. Am inversen Ausgang des ersten D-Flipflops 900 soll ein Zyklussignal ZS16 abgegeben werden, das während des Zählerstandes "16" ein Signal mit hohen Pegel aufweist. Dies ist dann der Fall, wenn zum Zeitpunkt der triggernden Flanke des Systemtaktes CLOCK am D-Eingang dieses Flipflops bereits ein Signal mit niedrigem Pegel angeboten wird. Dieses Signal muß also aus ausgewählten, signifikanten Zählerpositionssignalen ZAE00 bis ZAE15 bereits während des vorhergehenden Zählerzustandes "15" abgeleitet werden. In diesem Zustand ist das Zählerpositionssignal ZAE15 noch ein Signal mit niedrigem Pegel, während das niederwertigere Zählerpositionssignal ZAE14 bereits hohen Pegel aufweist. Man invertiert also das höhere Zählerpositionssignal ZAE15 mit Hilfe eines Inverters 904 und führt es gemeinsam mit dem niederwertigeren Zählerpositionssignal ZAE14 einem NAND-Glied 905 zu, dessen Ausgang mit dem D-Eingang des D-Flipflops 900 verbunden ist.

Das zweite D-Flipflop 901 des Zustandsgenerators erzeugt zueinander inverse Zyklussignale ZS31N bzw. ZS31P für den Zählerstand "31". Wieder werden die hier signifikanten Zählerpositionssignale ZAE14 und ZAE13, die beim vorhergehenden Zählerzustand "30" hohen Signalpegel bzw. niedrigen Signalpegel aufweisen, in analoger Weise mit Hilfe eines weiteren Inverters 906 und eines weiteren NAND-Gliedes 907 verknüpft. Der Ausgang des NAND-Gliedes 907 ist allerdings erst über ein weiteres UND-Glied 908 mit dem Eingang des D-Flipflops 901 verbunden. Diesem UND-Glied ist außerdem das generelle Rücksetzsignal RESET (s. Fig. 1) zugeführt. Das bedeutet, daß die Zyklussignale ZS31N bzw. ZS31P, den Zählerzustand "31" spezifizierend, auch dann abgegeben werden, wenn dieses generelle Rücksetzsignal auftritt, das im aktiven Zustand ein Signal mit niedrigem Pegel ist; es ist damit möglich, dem gesamten Netzwerk einen definierten Anfangszustand zu geben.

Dieselben beiden Zählerpositionssignale ZAE14 bzw. ZAE13 werden nun, allerdings in umgekehrter Form über einen weiteren Inverter 909 und ein weiteres nachgeschaltetes NAND-Glied 910 logisch verknüpft und dem vierten D-Flipflop 903 des Zustandsgenerators zugeführt. Diese umgekehrte Signalkombination der beiden Zählerpositionssignale tritt bei dem Zählerstand "14" des Zählers 110 auf, d. h. am Ausgang des vierten D-Flipflops 903 des Zustandsgenerators wird ein Zyklussignal ZS15N bzw. ZS15P abgegeben, das den Zählerstand "15" signalisiert. Das ist nur eine denkbare Realisierung eines Netzwerkes zur Erzeugung des Signals ZS15. Wird sie angewandt, so darf der Zähler 110 nie mit einem Wert größer als 14 geladen werden.

Analog wird auch die zweite Signalkombination der Zählerpositionssignale ZAE15 und ZAE14 wiederum in Verbindung mit dem weiteren Inverter 909 und einem zusätzlichen NAND-Glied 911 ausgewertet und dem Eingang des dritten D-Flipflops 902 des Zustandsgenerators zugeführt. An dessen inversem Ausgang steht daher ein Zyklussignal ZLSP an, das den Zustand "Zähler Laden" anzeigt, wenn er also gerade seinen aktuellen neuen Ladewert einnimmt und damit ein neuer Zählzyklus beginnt. Der Zustand "Zähler Laden" ist immer der dem Zustand 31 folgen.

Schließlich erzeugt der Zustandsgenerator aus den Zählerpositionssignalen ZAE03 bzw. ZAE04 wiederum über eine logische Verknüpfung mit einem weiteren Inverter 912 und einem weiteren UND-Glied 913 ein Zyklussignal ZSTD20. Die entsprechende Signalkombination der Zählerpositionssignale ZAE03 und ZAE04 erzeugt am Ausgang des UND-Gliedes 913 nur dann ein Zustandssignal mit hohem Pegel, wenn der Zähler gerade den Zählerstand "20" einnimmt.

Die Ausgangssignale des in Fig. 9 dargestellten Zustandsgenerators kennzeichnen also die verschiedenen, für den Phasenregelkreis signifikanten Zustände des Zählers 110 und sind Zeitsteuersignale für die übrigen Baueinheiten des Phasenregelkreises. Die Funktion und Bedeutung dieser Zyklussignale ist zum Teil bereits im Zusammenhang mit den vorstehend beschriebenen Baueinheiten des digitalen Phasenregelkreises erläutert bzw. wird noch im einzelnen nachfolgend dargestellt.

In der einleitenden Beschreibung des digitalen Phasenregelkreises anhand von Fig. 1 wurde erläutert, daß das Speicherregister 112 dann den aktuellen Zustand des Zählers 110 übernimmt, wenn ein verzögerter Markierimpuls MI-D noch vor dem Zählerzustand "16" vom Schieberegister 114 abgegeben wird. Wie dieses Speicherregister 112 im Detail aufgebaut ist, um diese Funktion zu realisieren, ist in dem Blockschaltbild von Fig. 10 dargestellt.

Die als Speicherregister bezeichnete Baueinheit umfaßt zunächst ein logisches Netzwerk zum Erzeugen des Steuersignales RAKT, das den aktiven Zustand des Speicherregisters 112 kennzeichnet. Dieses Schaltnetzwerk besitzt ein RS-Flipflop 1000, das mit dem zugeführten Zyklussignal ZS31N rückgesetzt wird. Bisher wurde vereinfacht davon ausgegangen, daß der vom Schieberegister 114 abgegebene verzögerte Markierungsimpuls MI-D im aktiven Zustand ein Signal mit hohem Pegel ist. Tatsächlich wird von dem Schieberegister 114 aber auch das dazu inverse Signal abgegeben und beide Signale MI-DP und MI-DN mit hohem bzw. niedrigem Signalpegel im aktiven Zustand dem Speicherregister 112 zugeführt. Der verzögerte Markierungsimpuls MI-DN, also das Niedrigpegelsignal, wird über ein ODER-Glied 1001 dem Setzeingang des RS-Flipflops 1000 direkt zugeführt. Der dazu inverse verzögerte Markierungsimpuls MI-DP wird über ein mit der fallenden Taktflanke angesteuertes D-Flipflop 1002 mit dem Systemtakt CLOCK eingefangen. Der Ausgang dieses Flipflops ist mit einem zweiten Eingang des ODER-Gliedes 1001 verbunden. Auf diese Weise wird das RS-Flipflop 1000 beim Auftreten eines verzögerten Markierungsimpulses gesetzt und danach gehalten, bis es wie beschrieben, durch das Zyklussignal ZS31N wieder zurückgesetzt wird.

Der Ausgang Q̄ des RS-Flipflops 1000 ist mit einem Eingang eines UND-Glied 1003 verbunden, dem außerdem das Zyklussignal ZS15P zugeführt wird. Dieses UND-Glied ist über ein NOR-Glied 1004 mit dem Dateneingang eines weiteren, durch den Systemtakt CLOCK getriggerten D-Flipflops 1005 verbunden. Tritt also das Zyklussignal ZS15P, den Zählerzustand "15" kennzeichnend, auf bevor das RS-Flipflop 1000 gesetzt wurde, dann schaltet das UND-Glied 1003 durch und mit dem nächsten Systemtakt CLOCK wird eine logische "0" in das D-Flipflop 1005 übernommen. Der den inaktiven Zustand des Speicherregisters 112 kennzeichnende Niedrigpegel des Steuersignals RAKT wird selbst gehalten. Dazu ist der Ausgang Q̄ des D-Flipflops 1005 über ein weiteres UND-Glied 1006 mit dem NOR-Glied 1004 verbunden. Das gilt allerdings nur, solange das dem zweiten Eingang dieses UND-Gliedes 1006 zugeführte inverse Zyklussignal ZS15N auf hohem Pegel bleibt. Im anderen Fall tritt der verzögerte Markierungsimpuls MI-D spätestens mit dem Zyklussignal ZS15P zusammen auf. Dann speichert das D-Flipflop 1005 eine logische "1" und das Steuersignal RAKT ist ein Hochpegelsignal.

Der beim Zwischenspeichern des verzögerten Markierungsimpulses MI-DP im D-Flipflop 1002 generierte Ausgangsimpuls ist der Übernahmetakt für ein 16-stufiges Register 1007, das völlig konventionell aus D-Flipflops aufgebaut und deshalb in Fig. 10 nur schematisch wiedergegeben ist. Den Ladeeingängen dieses Registers ist jeweils eines der Zählerpositionssignale ZAE00 bis ZAE15 zugeführt. Damit wird in dieses Register 1007 der Zustand des Zählers 110 kopiert, sobald ein mit dem Systemtakt CLOCK bewerteter verzögerter Markierungsimpuls MI-D aufgetreten ist.

Wie beschrieben, ist der Zähler 110 als Johnson-Zähler aufgebaut, andererseits wird der jeweilige Zählerzustand in Form eines Binärwertes über den Phasenmultiplexer 122 zu den Adreßeingängen des Festwertspeichers 124 übertragen. Aus diesem Grund muß der Inhalt des Registers 1007 umcodiert werden.

Hier findet nun eine Umkehrung des bei der Decodierung des binären Ladewertes für den Zähler 110 beschriebenen Vorganges statt. Es sei nochmals erinnert, daß beim Johnson-Zähler für jeden Zählerzustand eine signifikante Signalkombination "1" und "0" bzw. "0" und "1" bei nur einem Paar von Zählerposi-

13

tionssignalen existiert. Bezogen auf das in Fig. 10 dargestellte Register 1007 bedeutet dies z. B. bei Zählerzustand "1", daß die den beiden Zählerpositionssignalen ZAE00 und ZAE01 zugeordneten Registerstufen gesetzt bzw. rückgesetzt sind. Wie sich leicht nachvollziehen läßt, tritt genau der umgekehrte Fall bei diesen beiden Registerstufen im Zählerzustand "17" auf.

Aus diesem Grunde sind die zueinander inversen Datenausgänge der einzelnen Registerstufen des Registers 1007 in einem Codiernetzwerk miteinander logisch derart verknüpft, daß diese signifikanten Signalkombinationen bei Paaren von Zählerpositionssignalen feststellbar sind. Dies geschieht mit Hilfe von NOR-Gliedern 1008, die hier schematisch in zwei Ketten zu je 15 Elementen dargestellt sind. Jedem dieser NOR-Glieder 1008 ist in zyklischer Vertauschung der normale Datenausgang einer der Registerstufen des Registers 1007 und der dazu inverse Datenausgang der nächstniedrigeren bzw. der nächsthöheren Registerstufe zugeordnet.

Nach obiger Erklärung ergibt sich, daß z. B. die beiden obersten NOR-Glieder 1008 in jeder Kette jeweils dann einer logische "1" abgeben, wenn der Zählerzustand "1" bzw. "17" im Register 1007 gespeichert ist. Für jede der möglichen Signalkombinationen beim Speicherwert des Registers 1007 ergibt sich damit eindeutig nur ein einziges NOR-Glied 1008, das durchgeschaltet ist. Den möglichen Zuständen des Zählers 110 entsprechen damit 31 Signale, die hier mit U1 bis U31 bezeichnet sind.

Diese Signale werden nun mit Hilfe von hier nur schematisch dargestellten ODER-Verknüpfungen 1009 bis 1012 in jeweils eine Bitstelle eines binärcodierten Zustandswertes umgesetzt. Es läßt sich leicht überlegen, daß die niederwertigste Bitstelle PR1 dieses binären Zustandswertes immer bei allen ungeraden Zahlenwerte im Zustand "1" sein muß. Die erste ODER-Verknüpfung 1009 dieses Codierers faßt daher alle ungeradzahligen Ausgangssignale der NOR-Glieder 1008 zusammen. Analoges läßt sich für die weiteren drei ODER-Verknüpfungen 1010, 1011 und 1012 aus den entsprechenden Signalkombinationen der Dualzahlen zwischen 1 und 15 ableiten.

Diese vier so erzeugten Bitstellen PR1 bis PR4 des Zustandswertes im Zähler 110 bilden zusammen mit dem Steuersignal RAKT die Signale auf dem Ausgangsbus PHAR des Speicherregisters 112. Zu ergänzen bleibt, daß die 32 Zustände des Zählers 110 an sich in eine 5-stellige Binärzahl umzucodieren wären, im Anwendungsfall aber sind die vier Bitstellen PR1 bis PR4 der Zustandswerte ausreichend, da voraussetzungsgemäß nur die Zählerzustände "0" bis "15" zur Adressierung des Festwertspeichers 124 herangezogen werden.

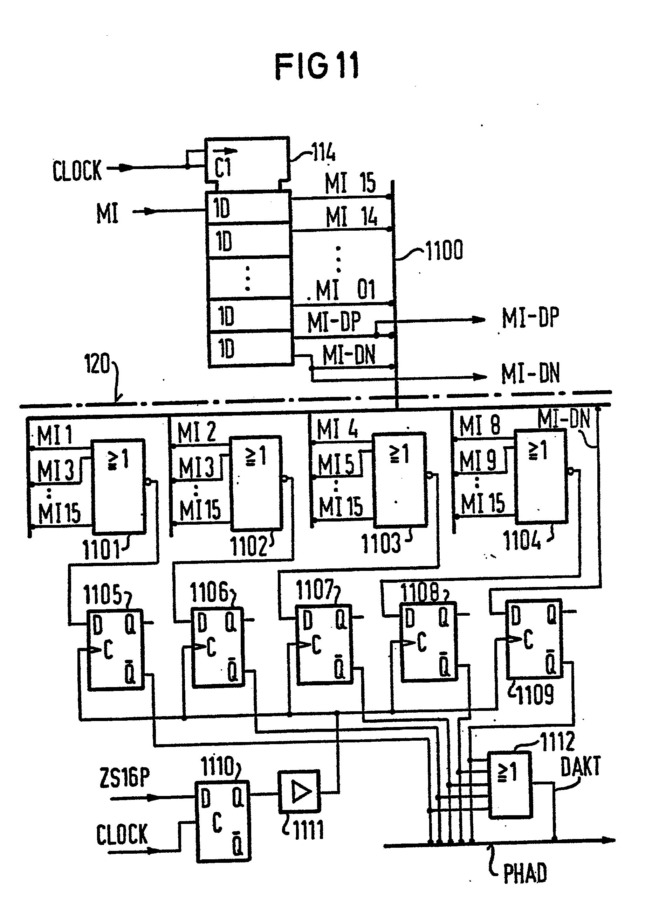

Im Prinzip durchaus ähnlich dem anhand von Fig. 10 beschriebenen Speicherregister 112 ist nun auch an das Schieberegister 114 angeschlossene Zwischenspeicherregister 120 aufgebaut. Diese beiden Baueinheiten des Phasenregelkreises sind in Fig. 11 dargestellt. Das Schieberegister 114 ist ein konventionelles 16-Bit Register, das den Systemtakt CLOCK als Schiebetakt verwendet, um die in die erste Stufe eingespeicherten Markierungsimpulse MI durch die 16 Stufen des Registers zu schieben. Dabei ergeben sich keine Besonderheiten, aus diesem Grund ist dieses Schieberegister 114 in Fig. 11 auch nur schematisch dargestellt.

Alle normalen Ausgänge der Registerstufen sind über einen Schieberegisterbus 1100 mit den Eingängen des Zwischenspeicherregisters 120 verbunden. Lediglich bei der höchstwertigen Registerstufe, der Ausgangsstufe sind beide zueinander inversen Ausgänge an den Schieberegisterbus 1100 angeschlossen und diese Ausgänge zudem an Ausgangsleitungen angeschlossen, die die beiden zueinander inversen Pegelwerte MI-DP bzw. MI-DN für die verzögerten Markierungsimpulse MI-D führen. Die übrigen Positionssignale auf den Ausgangsleitungen des Schieberegisters 114 sind mit MI1 bis MI15, beginnend bei der neben der Endstufe höchstwertigen Registerstufe, bezeichnet, so daß die Bezeichnungsweise die Verzögerungsfunktion des Schieberegisters 114 kennzeichnet.

Das Zwischenspeicherregister 120 enthält nun zunächst ein Decodiernetzwerk, das aus schematisch angedeuteten NOR-Gliedern 1101 bis 1104 aufgebaut ist. Dieses Decodiernetzwerk ist nach demselben Funktionsschema aufgebaut wie das entsprechende Netzwerk des Speicherregisters 112, bestehend aus den im einzelnen beschriebenen ODER-Verknüpfungen 1009 bis 1012. Damit ist klar, daß z. B. das niederwertigste NOR-Glied 1101 des Zwischenspeicherregisters 120 die niedrigste Bitstelle für den binärcodierten Positionswert des Markierimpulses MI im Schieberegister 114 generiert. Die höchstwertige Bitstelle dieses Binärwertes wird direkt aus dem verzögerten Markierungsimpuls MI-DN gebildet.

In herkömmlicher Weise wird dieser fünfstellige Binärwert für die Position des verzögerten Markierungsimpulses MI-D in fünf D-Flipflops 1105 bis 1109 des Zwischenspeicherregisters 120 gespeichert. Der Übernahmetakt für diese Speicherflipflops 1105 bis 1109 wird aus dem Zyklussignal ZS16P abgeleitet, das mit dem Systemtakt CLOCK in ein weiteres D-Flipflop 1110 übernommen wird. Der normale Ausgang dieses D-Flipflops 1110 ist über einen Leistungsverstärker 1111 gemeinsam an die Takteingänge der Speicherflipflops 1105 bis 1109 angeschlossen. Auf diese Weise wird zum Zeitpunkt des Zählerzustandes "16" die aktuelle Position des verzögerten Markierungsimpulses MI-D im Schieberegister 114 zwischengespeichert.

Die inversen Ausgänge der Speicherflipflops 1105 bis 1109 sind einerseits direkt an den Ausgangsbus PHAD des Zwischenspeicherregisters 120 angeschlossen und andererseits nochmals über eine ODER-Verknüpfung 1112 geführt, die immer dann das den aktiven Zustand des Zwischenspeicherregisters 120 anzeigende Steuersignal DAKT abgibt, wenn mindestens eines der Speicherflipflops 1105 bis 1109 zurückgesetzt ist.

Beide Ausgangsbusse PHAR und PHAD des Speicherregisters 112 bzw. des Zwischenspeicherregisters 120 sind, wie in Fig. 1 dargestellt, über den Phasenmultiplexer 122 mit den Andreßeingängen des Festwertspeichers 124 verbunden. Der Aufbau dieses Phasenmultiplexers 122 ist konventionell und gleicht im übrigen dem des in Fig. 7 dargestellten Zählermultiplexers 126, so daß eine weitere Erläuterung hier nicht notwendig erscheint.

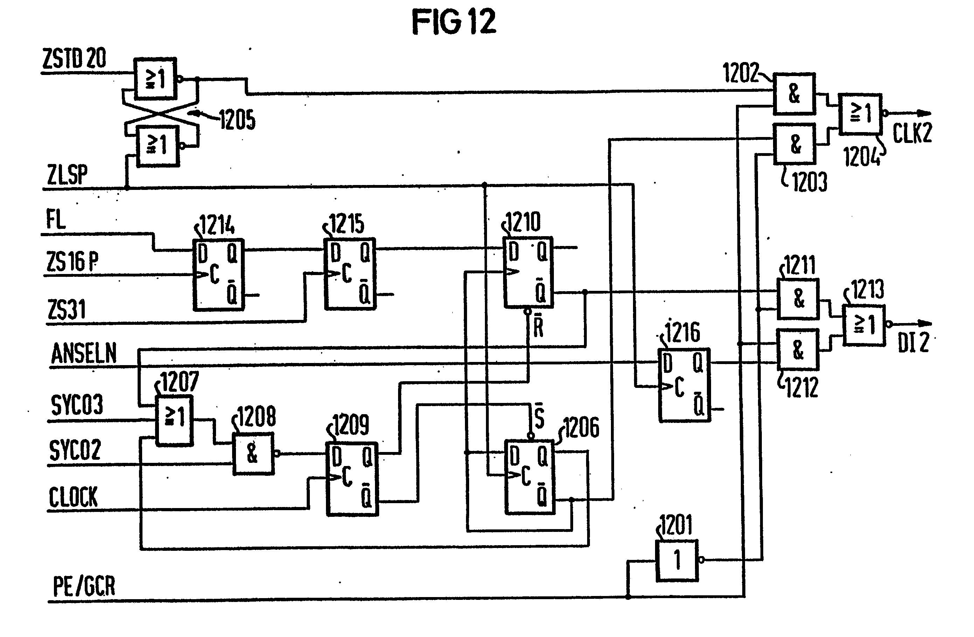

Damit sind nun alle Funktionen der Steuerlogik 118 des Phasenregelkreises beschrieben, soweit sie sich auf die Korrektur der Sollwerte im Phasenregelkreis selbst beziehen. In Fig. 12 ist schließlich ein Schaltbild des Datenausgabenetzwerkes 204 der Steuerlogik 118 dargestellt, das den mit Hilfe des Phasenregelkreises wiedergewonnenen Datentakt CLK2 und die abgeleiteten Datensignale DI2 erzeugt.

Es sei zunächst die Erzeugung des wiedergewonnen Datentaktes CLK2 betrachtet. Diese wird über das Auswahlsignal PE/GCR je nach dem gerade verwendeten Schreibverfahren gesteuert. Dazu wird dieses Auswahlsignal einmal direkt und einmal über einen Inverter 1201 jeweils ersten Eingängen zweier UND-Glieder 1202 bzw. 1203 einer Taktausgangsstufe zugeführt, die außerdem ein den UND-Gliedern nachgeschaltetes NOR-Glied 1204 enthält. Der zweite Eingang des einen UND-Gliedes 1202 ist mit dem Ausgang einer RS-Kippstufe 1205 verbunden, die mit dem Zyklussignal ZSLP für den Zustand "Zähler Laden" rückgesetzt und mit dem Zyklussignal ZSTD20 für den Zählerzustand "20" gesetzt wird. Im eingeschwungenen Zustand des digitalen Phasenregelkreises definiert das Zyklussignal ZSTD20 - wie ausgeführt - die Mitte eines Zählzyklus des Zählers 110. Wenn nun, wie noch zu erläutern sein wird, die Flanke im abgeleiteten Datensignal DI2 normalerweise immer zwischen zwei Zählzyklen erzeugt wird, dann muß beim PE-Verfahren die Taktflanke des wiedergewonnen Datentaktes CLK2 damit zusammenfallen bzw. beim GCR-Verfahren die Taktflanke um einen halben Zählzyklus verschoben werden.

Daher wird durch das Auswahlsignal PE/GCR, wenn das GCR-Verfahren gerade benutzt wird, das mit dem Ausgang der RS-Kippstufe 1205 verbundene eine UND-Glied 1202 durch das Zyklussignal ZSTD20 durchgeschaltet, worauf das NOR-Glied 1204 eine negative Taktflanke abgibt. Dagegen wird für das Erzeugen des wiedergewonnen Datentaktes in Verbindung mit dem PE-Verfahren das Zyklussignal ZSLP für den Zustand "Zähler Laden" benutzt. Es wird als Triggersignal einem weiteren D-Flipflop 1206 zugeführt, dessen inverser Ausgang auf seinen Dateneingang rückgekoppelt und außerdem mit dem zweiten UND-Glied 1203 verbunden ist. Im rückgesetzten Zustand gibt also dieses D-Flipflop 1206 zum Zeitpunkt des Auftretens des Zyklussignales ZSLP ein positives Ausgangssignal ab, das dann das zweite UND-Glied 1203 durchschaltet.

Diesem weiteren D-Flipflop 1206 ist nun ein Setz/Rücksetznetzwerk, aufgebaut aus einem weiteren ODER-Glied 1207, einem NAND-Glied 1208 und einem weiteren D-Flipflop 1209 zugeordnet. Das ODER-Glied weist drei Eingänge auf, von denen einer mit dem inversen Ausgang eines weiteren, der Schaltungsanordnung zum Erzeugen der abgeleiteten Datensignale DI2 zuzurechnenden D-Flipflops 1210 verbunden ist. Wie noch zu erläutern sein wird, wird dieses D-Flipflop 1210 mit einer negativen Taktflanke des Flankensignales FL rückgesetzt und schaltet damit das ODER-Glied 1207 durch.

Ein zweiter Eingang dieses ODER-Gliedes ist mit dem normalen Ausgang des D-Flipflops 1206 verbunden und einem dritten Eingang ist das in Verbindung mit Fig. 3 bzw. Fig. 4 beschriebene dritte abgeleitete Synchronisationssignal SYC03 zugeführt. Dieses Signal ist, wie in Fig. 4 gezeigt, während des Synchronisiervorganges ein Niedrigpegelsignal und nimmt den anderen Signalzustand ein, sobald der digitale Phasenregelkreis einsynchronisiert ist. In diesem Zustand ist also das ODER-Glied 1207 immer durchgeschaltet.

Das mit einem Eingang an den Ausgang dieses ODER-Gliedes 1207 angeschlossene NAND-Glied 1208 empfängt an seinem zweiten Eingang das zweite abgeleitete Synchronisationssignal SYC02. Dieses kennzeichnet während des Synchronisierungsvorganges den Beginn des Zählermodus, wie im Zusammenhang mit der Beschreibung des Synchronisierungsnetzwerkes 201 in Verbindung mit Fig. 3 bzw. Fig. 4 erläutert wurde. Das NAND-Glied 1208 gibt also im einsynchronisierten Zustand des digitalen Phasenregelkreises immer ein Ausgangssignal mit Niedrigpegel an den Dateneingang des angeschlossenen D-Flipflops 1209 ab und hält es so zurückgesetzt.

Der inverse Ausgang dieses D-Flipflops ist nun mit einem invertiert ausgeführten Setzeingang des oben beschriebenen D-Flipflops 1206 verbunden, der damit nur während des Synchronisierungsvorganges wirksam werden kann. Umgekehrt ist der normale Datenausgang des D-Flipflops 1209 im Setz/Rücksetznetzwerk mit einem Rücksetzeingang des D-Flipflops 1210 verbunden, der also im einsynchronisierten Zustand des Phasenregelkreises indirekt durch den Systemtakt CLOCK aktiviert wird.

Andererseits wird das NAND-Glied 1208 im Setz/Rücksetznetzwerk nur einmal zu Beginn des Zählermodus während des Synchronisiervorganges durch das zweite abgeleitete Synchronisationssignal SYC02 durchgeschaltet. Damit wird über das D-Flipflop 1209 dieses Netzwerkes das D-Flipflop 1206 definiert gesetzt und schaltet nun in jedem Zählerzyklus, getriggert durch das Zyklussignal ZSLP einmal um. Dies ergibt dann den für das PE-Schreibverfahren gewünschten wiedergewonnen Datentakt CLK2 am Ausgang des NOR-Gliedes 1204.

Eine vergleichbare Ausgangsstufe, wiederum bestehend aus zwei UND-Gliedern 1211 und 1212 sowie einem an diese angeschalteten NOR-Glied 1213 gibt die abgeleiteten Datensignale DI2 ab. Wiederum wird je eines dieser UND-Glieder bei einem der beiden Schreibverfahren PE bzw. GCR selektiert. Dem einen UND-Glied 1211 dieser Datenausgangsstufe ist eine Kette von D-Flipflops 1214 und 1215 zugeordnet, die als letztes das D-Flipflop 1210 aufweist. Dem durch das Zyklussignal ZS16 getriggerten D-Flipflop 1214 ist das Flankensignal FL zugeführt, dessen Signalzustand die Richtung des letzten Flankenwechsels im Datensignal DI kennzeichnet. Mit dem Zyklussignal ZS31, d. h. am Ende eines Zählerzyklus wird das Flankensignal in das zweite D-Flipflop 1215 übernommen und schließlich dieser Speicherwert, gesteuert durch das Umschalten des D-Flipflops 1206, in das D-Flipflop 1210 geladen. Da der inverse Ausgang dieses D-Flipflops mit dem zweiten Eingang des beim GCR-Verfahrens selektierten UND-Gliedes 1211 verbunden ist, erscheint zu diesem Zeitpunkt dieselbe Flanke des Datensignals am Ausgang der Datenausgangsstufe als Flanke des abgeleiteten Datensignals DI2. Dem zweiten UND-Glied 1212 dieser Stufe ist ein weiteres D-Flipflop 1216 zugeordnet, das mit dem Zyklussignal ZSLP getriggert wird und dessen Dateneingang das Auswahlsignal ANSELN für den Zählermultiplexer 126 zugeführt ist. Wie beim Fenstergenerator 202 in Verbindung mit Fig. 6 erläutert, tritt es zusammen mit dem Zyklussignal ZSTD20 auf.

## Patentansprüche

1. Schaltungsanordnung zum Wiedergewinn binärer Datensignale (DI) und in diesen enthaltener Datentaktsignale (CLK2) mit einem durch einen internen Takt (CLOCK) gesteuerten digitalen Phasenregelkreis, dem die empfangenen Datensignale (DI) als Markierungsimpulse (MI), die zeitlichen Lagen der Datensignalflanken kennzeichnend, und als Flankensignale (FL), die Richtung der zuletzt aufgetretenen Datensignalflanke kennzeichnend, zugeführt werden und der einen Phasendetektor und einen steuerbaren Oszillator in Form eines ladbaren Zählers (110) aufweist, der vom internen Takt gesteuert und mit einem der Frequenz und Phase des aktuellen Datentaktes (CLK2) entsprechenden variablen Anfangswert (ZLAD0 bis ZLAD3) aus einem externen Sollwertgeber (124) ladbar ist, so daß damit ein die ständig aktualisierte Zeitbasis des Phasenregelkreises bildender Zählzyklus festgelegt ist, dadurch gekennzeichnet, daß der Phasendetektor ein Schieberegister (114) umfaßt, durch das jeder Markierungsimpuls (MI), gesteuert vom internen Takt, geschoben wird und das einen um eine vorgegebene Anzahl interner Taktperioden verzögerten Markierungsimpuls (MI-D) abgibt, daß der Phasendetektor weiterhin ein dem Zähler zugeordnetes erstes Zwischenspeicherregister (112) sowie ein dem Schieberegister zugeordnetes zweites Zwischenspeicherregister (120) zum Zwischenspeichern des gegenwärtigen Standes des Zählers als voreilender Phasenwert bzw. der gegenwärtigen Position des durchlaufenden Markierungsimpulses als nacheilender Phasenwert in Form je eines Binärwertes aufweist, wobei diese Register (112 bzw. 120) alternativ abhängig davon aktivierbar sind, ob zuerst der verzögerte Markierungsimpuls (MI-D) bzw. ein vorbestimmter Zählerstand (ZS16) auftritt und somit neben dem aktuellen Frequenzwert dem externen Sollwertgeber (124) selektiv der Inhalt des jeweils aktivierten Registers als Istwert des Phasenwertes zugeführt wird, um daraus den neuen Anfangswert bestehend aus aktuellem Frequenz- und Phasenwert zu generieren.

2. Schaltungsanordnung nach Anspruch 1, dadurch gekennzeichnet, daß der Phasendetektor weiterhin einen Multiplexer (122) aufweist, dessen Eingänge an Ausgänge des Speicherregisters (112) und des Zwischenspeicherregisters (120) angeschlossen sind und dessen Ausgänge mit Eingängen des externen Sollwertgebers (124) verbunden sind und der derart ausgebildet ist, daß selektiv der Inhalt des Speicherregisters bzw. des Zwischenspeicherregisters, ausgelöst durch den aktivierten Zustand des entsprechenden Registers kennzeichnende Steuersignale (SAKT bzw. RAKT), zum externen Sollwertgeber übertragbar ist.

3. Schaltungsanordnung nach Anspruch 2, dadurch gekennzeichnet, daß ein Frequenzregister (116) zum Zwischenspeichern eines weiterhin vom Sollwertgeber (124) abgegebenen aktuellen, der gegenwärtigen Frequenz des Datentaktes entsprechenden Sollwertes vorgesehen ist und Ausgänge dieses Registers mit Eingängen des externen Sollwertgebers verbunden sind, so daß diesem zum Generieren eines neuen Anfangswertes bzw. Sollwertes der Inhalt des Frequenzregisters als aktueller Sollwert und der vom Multiplexer (122) selektierte Phasenwert als aktueller Istwert für einen Soll/Ist-Vergleich angeboten wird.

4. Schaltungsanordnung nach Anspruch 3, dadurch gekennzeichnet, daß ein zweiter Multiplexer (126) vorgesehen ist, dessen Eingänge mit Ausgängen sowohl des Sollwertgebers (124) als auch des Frequenzregisters (116) und dessen Ausgänge mit dem Zähler (110) verbunden sind und daß dieser zweite Multiplexer so ausgebildet ist, daß er selektiv in Abhängigkeit von dem festgestellten Auftreten eines verzögerten Markierungsimpulses (MI-D) im abgelaufenen Zählzyklus den Sollwertgeber, andernfalls jedoch das Frequenzregister auf den Zähler durchschaltet.

5. Schaltungsanordnung nach einem der Ansprüche 2 bis 4, dadurch gekennzeichnet, daß der Sollwertgeber (124) als Speicher ausgebildet ist, wobei der vom ersten Multiplexer (122) selektierte Phasenwert ersten Adreßeingängen und der Inhalt des Frequenzregisters (116) zweiten Adreßeingängen zugeführt ist, so daß damit ein Speicherplatz auswählbar ist, in dem je ein der individuellen Kombinationen von Soll- und Istwert zugeordneter neuer, dem Frequenzregister (116) zuzuführender Sollwert bzw. ein neuer Anfangswert des Zählers (110) gespeichert ist.

6. Schaltungsanordnung nach einem der Ansprüche 2 bis 5, dadurch gekennzeichnet, daß im Phasenregelkreis eine Steuerlogik (118) zum Steuern des Funktionsablaufes vorgesehen ist und diese dazu einen Zustandsgenerator (203) zum Erzeugen von aus dem aktuellen Stand des Zählers (110) abgeleiteten Zyklussignalen, einen Fenstergenerator (202) zum Erzeugen von Zeitsteuersignalen für die übrigen Baueinheiten des Phasenregelkreises und ein Datenausgabenetzwerk (204) zum Erzeugen der wiedergewonnen Datensignale (DI2) und des separierten Datentaktes (CLK2) besitzt.

7. Schaltungsanordnung nach Anspruch 6, **dadurch gekennzeichnet**, daß der Zähler (110) aus einer Mehrzahl von hintereinander geschalteten Registerstufen (803) aufgebaut ist, deren aktuelle Zustände jeweils gemeinsam den jeweiligen Zählerstand wiedergeben und deren Datenausgänge (Q) parallel mit Eingängen des Zustandsgenerators (203) verbunden sind und daß der Zustandsgenerator zum Erzeugen eines einem Zählerstand (i) entsprechenden Zyklussignales (ZSi) jeweils ein selektiv auf bestimmte, für den vorhergehenden Zählerstand (i-1) signifikante Ausgangssignale der Registerstufen (803) ansprechendes logisches Netzwerk (z. B. 904, 905) und eine daran angeschlossene Kippstufe (z. B. 900) aufweist, die vom internen Takt (CLOCK) angesteuert wird und damit synchron zum Zählerstand (i) für eine Periode des internen Taktes das entsprechende Zyklussignal (ZSi) abgibt.

8. Schaltungsanordnung nach einem der Ansprüche 6 oder 7, **dadurch gekennzeichnet**, daß der Fenstergenerator (202) zum Erzeugen eines mit dem Zählerzyklus synchronisierten Auswahlsignales (ANSELP bzw. ANSELN) für den zweiten Multiplexer (126) ein logisches Glied (611) aufweist, das bei einem im laufenden Zählerzyklus aufgetretenen Markierungsimpuls (MI-D) durch die davon abgeleiteten Steuersignale (RAKT, SAKT) aktivierbar ist und mit dem eine Kippstufe (610) verbunden ist, die durch eines der Zylussignale gesteuert, einen entsprechenden Schaltzustand einnimmt und das Auswahlsteuersignal für den zweiten Multiplexer abgibt.

9. Schaltungsanordnung nach Anspruch 8, **dadurch gekennzeichnet**, daß der Fenstergenerator (202) weiterhin zum Erzeugen eines den Ladevorgang des Frequenzregisters (116) auslösenden Steuersignales (SFREG) eine weitere, durch den internen Takt (CLOCK) gesteuerte Kippstufe (613) besitzt, der ein mit dem Laden des Zählers (110) synchronisiertes Zyklussignal (ZLSP) zugeführt ist und deren Ausgangssignal eine RS-Kippschaltung (602) setzt und daß im Fenstergenerator außerdem ein weiteres logisches Glied (612) vorgesehen ist, das im gesetzten Zustand der RS-Kippschaltung das Auswahlsignal (ANSELP) für den zweiten Multiplexer (126) durchschaltet und damit das Ladesteuersignal abgibt.

10. Schaltungsanordnung nach einem der Ansprüche 6 bis 9, **dadurch gekennzeichnet**, daß das Datenausgabenetzwerk (204) zum Ausgeben des separierten Datentaktes (CLK2) eine aus UND-Gliedern (1202, 1203) und einem damit verbundenen ODER-Glied (1204) aufgebaute Ausgangsstufe aufweist, wobei die UND-Glieder durch einem ersten Eingang zugeführte, die mögliche Position für einen Flankenwechsel in Bezug auf die Bitzelle im Datensignalstrom kennzeichnende Auswahlsignale (PE/GCR) wahlweise aktivierbar sind und daß an die zweiten Eingänge der UND-Glieder der Ausgang einer weiteren RS-Kippschaltung (1205) bzw. ein Ausgang eines D-Flipflops (1206) angeschlossen sind, wobei die RS-Kippschaltung (1205) durch ein die Bitzellenmitte kennzeichnenden Zyklussignal (ZSTD20) gesetzt bzw. durch das während des Ladevorganges des Zählers (110) auftretende Zyklussignal (ZLSP) zurückgesetzt und das D-Flipflop (1206) durch letzteres Zyklussignal (ZLSP) jeweils umgeladen wird.

11. Schaltungsanordnung nach Anspruch 10, **dadurch gekennzeichnet**, daß das Datenausgabenetzwerk (204) zum Ausgeben der wiedergewonnenen, mit dem separierten Datentakt (CLK2) synchronisierten Datensignale (DI2) eine weitere, identisch zur ersten aufgebaute und analog durch Auswahlsignale (PE/GCR) aktivierbare Ausgangsstufe mit zwei weiteren UND-Gliedern (1211, 1212) und einem weiteren ODER-Glied (1213) aufweist und weitere (D-Flipflops (1210 bzw. 1216) vorgesehen sind, die jeweils an einen der gesteuerten Eingänge der UND-Glieder angeschlossen sind, wobei das eine D-Flipflop (1210), seinerseits gesteuert durch den Umschaltvorgang des durch das Zyklussignal (ZLSP) umgeladenen D-Flipflops (1206), das seinem Dateneingang zugeführte Flankensignal (FL) übernimmt und das andere D-Flipflop (1216), gesteuert durch das während des Ladevorganges des Zählers (110) auftretende Zyklussignal (ZLSP), das Auswahlsignal (ANSELN) zum selektiven Aktivieren des zweiten Multiplexers (126) übernimmt.

12. Schaltungsanordnung nach einem der Ansprüche 6 bis 11, **dadurch gekennzeichnet**, daß die Steuerlogik (118) außerdem ein Synchronisierungsnetzwerk (201) zum Einphasen des Phasenregelkreises nach einer Unterbrechung der Übertragung von Datensignalen aufweist und diesem Netzwerk ein externes Synchronisierungssignal (SYNC), der interne Takt (CLOCK) und eine regelmäßige Folge von der Synchronisierung dienenden Datensignalen (DI) in Form der aus ihnen abgeleiteten verzögerten Markierungsimpulse (MI-D) zugeführt sind und daß das Frequenzregister (116) als durch den internen Takt (CLOCK) gesteuerter Binärzähler ausgebildet ist, wobei ein Zählmodus des Registers durch ein zu Beginn des Synchronisierungsvorganges vom Synchronisierungsnetzwerk abgegebenes Auswahlsignal (SELFR) eingeleitet und nach dem Empfangen einer vorbestimmten Anzahl von verzögerten Markierungsimpulsen wieder rückgesetzt wird und wobei die Frequenz des internen Taktes (CLOCK) in bezug auf den in der Teilfolge der Datensignale (DI) enthaltenen Datentakt sowie die Breite des Frequenzregisters derart gewählt sind, daß am Ende des Zählmodus im Frequenzregister als Zählwert der der gemittelten augenblicklichen Datenfrequenz entsprechende Anfangssollwert für den Phasenregelkreis steht.

13. Schaltungsanordnung nach Anspruch 12, **dadurch gekennzeichnet**, daß das Synchronisierungsnetzwerk (201) weiterhin eine Bewertungsstufe (301, 302, 303) zum Einphasen des Synchronisierungssignales (SYNC) auf den internen Takt (CLOCK) aufweist, die ein so bewertetes Synchronisierungssignal abgibt und daß ein Inverter (304), der dieses bewertete Synchronisierungssignal in ein Rücksetzsignal (RISFR) für das Frequenzregister (116) umsetzt, und weiterhin eine weitere RS-Kippschaltung (305) vorgesehen sind, die durch das bewertete Synchronisierungssignal gesetzt wird und in diesem Zustand ein erstes abgeleitetes Synchronisierungssignal (SYC01) abgibt, das einen andauernden Synchronisierungsvorgang kennzeichnet und in gesteuerten Einheiten des Phasenregelkreises nur im eingephasten Zustand ablaufende Vorgänge, insbesondere Registerlade- und Auslesevorgänge sperrt.

14. Schaltungsanordnung nach Anspruch 13 mit einem Synchronisierungsnetzwerk weiterhin **gekennzeichnet durch** ein UND-Glied (312), das einerseits an den normalen Ausgang (Q) der durch das bewertete Synchronisierungssignal gesetzten RS-Kippschaltung (305) angeschlossen ist und dem außerdem am gesteuerten Eingang die verzögerten Markierungsimpulse (MI-D) zugeführt sind, durch eine Kette von bezüglich ihrer Datenausgänge und Dateneingänge in Serie geschalteten D-Flipflops (306 bis 311), deren Takteingänge parallel an den Ausgang des UND-Gliedes (312) angeschlossen sind und von denen der Dateneingang des ersten D-Flipflops (306) an den normalen Ausgang (Q) der RS-Kippschaltung (305) angeschlossen ist, durch ein ODER-Glied (313), dessen Eingänge mit dem inversen Ausgang (Q̄) des ersten D-Flipflops (306) bzw. dem normalen Ausgang (Q) des zweiten D-Flipflops (307) der Kette verbunden ist und das ein zweites abgeleitetes Synchronisierungssignal (SYC02) abgibt und durch eine weitere RS-Kippstufe (314), die durch das zweite abgeleitete Synchronisierungssignal (SYC02) gesetzt und durch das Rücksetzsignal (RESFR) bzw. durch ein Steuersignal (VELD) rückgesetzt wird, das am inversen Ausgang (Q̄) des vorletzten D-Flipflops (310) abgegeben wird und das Ende des Synchronisierungsvorganges kennzeichnet, wobei mit dem am Ausgang des letzten D-Flipflops (311) der Kette abgegebenen verzögerten Steuersignal (ELDP), kennzeichnend das Ende des Zählermodus, die vom bewerteten Synchronisierungssignal gesetzte RS-Kippschaltung (305) zurückgesetzt wird.

15. Schaltungsanordnung nach einem der Ansprüche 5 bis 14, bei der der interne Takt derart gewählt ist, daß die nominale Bitzelle der Datensignale, übertragen mit der Nennfrequenz, 24 Taktperioden breit ist, **dadurch gekennzeichnet**, daß der Zähler (110) als 16-stufiger Zähler mit maximal 32 Zählerzuständen ausgebildet und mit neuen Anfangswerten zwischen 0 und 15 ladbar ist, daß das Frequenzregister (116) als Binärzähler mit einem in bezug auf den Zähler (110) n-fachen maximalen Zählerstand ausgebildet ist und daß im Zähler (110) ein Decodierer (800) vorgesehen ist, der einen als neuen Anfangswert zugeführten vierstelligen Binärwert (ZLAD0 bis ZLAD3) in ein bestimmtes von 16, für einen Zählerstand spezifischen Decodiersignalen (DEC01 bis DEC15) umsetzt und daß an diesen Decodierer ein Ladenetzwerk (802) für die Registerstufen (803) des Zählers (110) angeschlossen ist, das die parallel zugeführten Decodiersignale individuell den einzelnen Registerstufen zugeführte Ladesignale (ZRP00 bis ZRP14) umsetzt.

16. Schaltungsanordnung nach Anspruch 15, **dadurch gekennzeichnet**, daß das Speicherregister (112) neben einem 16-stufigen Register (1007), dem parallel dem aktuellen Inhalt der Zählerregisterstufen (803) jeweils entsprechende Zählerpositionssignale (ZAE00 bis ZAE15) zugeführt sind, ein Decodiernetzwerk aufweist, das aus ODER-Verknüpfungen (1008 bzw. 1009) besteht und das in Umkehrung zu den Eingangsschaltungen des Zählers (110) die gemeinsam einen Zählerzustand spezifizierenden Zählerpositionssignale in einen Binärwert für den aktuellen Zählerstand umsetzt.

17. Schaltungsanordnung nach einem der Ansprüche 15 oder 16, **dadurch gekennzeichnet**, daß das Schieberegister (114) als 16-stufiges Register ausgebildet ist und das mit den Registerstufen parallel verbundene Zwischenspeicherregister (120) ebenso ein Ladenetzwerk, aufgebaut aus NAND-Gliedern (1101 bis 1104) zum Umcodieren der aktuellen Position eines Markierungsimpulses (MI) im Schieberegister in einen Binärwert aufweist und daß entsprechende D-Flipflops (1105 bis 1109) zum Zwischenspeichern dieses Binärwertes vorgesehen sind

18. Schaltungsanordnung nach Anspruch 17, **dadurch gekennzeichnet**, daß dem Takteingang des 16-stufigen Registers (1007) im Speicherregister (112) der mit dem internen Takt (CLOCK) bewertete, verzögerte Markierungsimpuls (MI-D) als Übernahmetakt zugeführt und andererseits die D-Flipflops (1105 bis 1109) im Zwischenspeicherregister (120) parallel durch das mit dem internen Takt bewertete Zyklussignal (16) auftritt, so daß selektiv entweder das Speicherregister bzw. das Zwischenspeicherregister aktiviert wird.

## Claims

1. Circuit arrangement for recovering binary data signals (DI) and data clock signals (CLK2) contained in the latter and having a digital phase control circuit controlled by an internal clock (CLOCK), to which the received data signals (DI) are fed as marker pulses (MI) identifying the timing positions of the data signal edges and as edge signals (FL) identifying the direction of the last data signal edge to occur and which phase control circuit has a phase detector and a controllable oscillator in the form of a presettable counter (110) which is controlled by the internal clock and can be loaded with an initial value (ZLAD0 to ZLAD3) corresponding to the frequency and phase of the current data clock (CLK2) from an external rated value generator (124) so that a counter cycle which forms the constantly updated time base of the phase control circuit is defined, characterized in that the phase detector comprises a shift register (114) through which each marker pulse (MI), controlled by the internal clock, is shifted and which issues a marker pulse (MI-D) delayed by a pre-determined number of internal clock periods, in that the phase detector also has a first intermediate storage register (112) assigned to the counter and a second intermediate storage register (120) assigned to the shift register for the intermediate storage of the current state of the counter as a leading phase value or of the current position of the marker pulse passing through as a trailing phase value, each in the form of a binary value, these registers (112 and 120) being alternately actuable depending on whether firstly the delayed marker pulse (MI-D) or alternatively a predetermined counter state (ZS16) occurs and so that, in addition to the current frequency value, the external rated value generator (124) is selectively fed with the contents of the respectively actuated register as the actual value of the phase value in order to generate from it the new initial value, consisting of the actual frequency value and phase value.

2. Circuit arrangement according to Claim 1, characterized in that the phase detector also has a multiplexer (122), the inputs of which are connected to outputs of the storage register (112) and of the intermediate storage register (120) and the outputs of which are connected to inputs of the external rated value generator (124) and which is constructed in such a way that the contents of the storage register or of the intermediate storage register can be selectively transferred to the external rated value generator, triggered by the control signals (SAKT or RAKT) identifying the actuated state of the corresponding register.

3. Circuit arrangement according to Claim 2, characterized in that a frequency register (116) is provided for intermediate storage of a current rated value also issued by the rated value generator (124) and corresponding to the present frequency of the data clock and outputs of this register are connected to inputs of the external rated value generator so that the latter is presented with the contents of the frequency register as current rated value and with the phase value selected by the multiplexer (122) as current actual value for a rated/actual value comparison for the purpose of generating a new initial value or rated value.

4. Circuit arrangement according to Claim 3, characterized in that a second multiplexer (126) is provided, the inputs of which are connected to outputs both of the rated value generator (124) and of the frequency register (116) and the outputs of which are connected to the counter (110) and in that this second multiplexer is constructed in such a way that it selectively switches through the rated value generator to the counter as a function of having detected a delayed marking pulse (MI-D) in the counting cycle which has occurred, but otherwise, however, switches through the frequency register to the counter.

5. Circuit arrangement according to one of Claims 2 to 4, characterized in that the rated value generator (124) is constructed as a memory, the phase value selected by the first multiplexer (122) being fed to first address inputs and the contents of the frequency register (116) being fed to second address inputs so that in this way a memory location can be selected in which in each case one new rated value associated with the individual combinations of rated and actual value and to be fed to the frequency register (116) or a new initial value of the counter (110) is stored.

6. Circuit arrangement according to one of Claims 2 to 5, characterized in that, in the phase control circuit a control logic (118) for controlling the function sequence is provided and for this purpose the control logic has a status generator (203) for generating cycle signals derived from the current state of the counter (110), a window generator (202) for generating time control signals for the other components of the phase control circuit and a data output network (204) for generating the recovered data signals (DI2) and the separate data clock (CLK2).

7. Circuit arrangement according to Claim 6, characterized in that the counter (110) is constructed from a plurality of series-connected register stages (803), the current states of which in each case together reproduce the relevant counter state and the data outputs (Q) of which are connected in parallel to inputs of the status generator (203) and in that the status generator has a logic network (e.g. 904, 905) for generating a cycle signal (ZSi) corresponding to a counter state (i), in each case selectively responding to certain output signals significant for the preceding counter state (i-1), of the register stages (803), and a trigger element (e.g. 900) which is connected to said logic network and actuated by the internal clock (CLOCK) and thus issues the corresponding cycle signal (ZSi) synchronously with the counter state (i) for a period of the internal clock.

8. Circuit arrangement according to one of Claims 6 or 7, characterized in that the window generator (202) has a logic member (611) for generating a selection signal (ANSELP or ANSELN) synchronized with the counter cycle for the second multiplexer (126), which logic member can be actuated in the event of a marker pulse (MI-D) having occurred in the current counter cycle by the control signals (RAKT, SAKT) derived from the marker pulse and to which a trigger element (610) is connected which is controlled by one of the cycle signals, assumes a corresponding switching state and issues the selection control signal for the second multiplexer.

9. Circuit arrangement according to Claim 8, characterized in that the window generator (202) has, also for generating a control signal (SFREG) which triggers the loading process of the frequency register (116), a further trigger element (613) controlled by the internal clock (CLOCK), to which trigger element a cycle signal (ZLSP) synchronized with the loading of the counter (110) is fed and the output signal of which sets an RS-trigger circuit (602) and in that in the window generator a further logic member (612) is also provided which in the set state of the RS trigger circuit switches through the selection signal (ANSELP) for the second multiplexer (126) and thus issues the load control signal.

10. Circuit arrangement according to one of Claims 6 to 9, characterized in that the data output network (204) has, for outputting the separate data clock (CLK2), an output stage formed from AND members (1202, 1203) and an OR member (1204) connected to it, the AND members being selectively actuable by means of selection signals (PE/GCR) which are fed to a first input and identify the possible position for an edge change in relation to the bit cell in the data signal stream and in that the output of a further RS trigger circuit (1205) or an output of a D-type flip flop (1206) is connected to the second inputs of the AND members, the RS trigger circuit (1205) being set by a cycle signal (ZSTD20) identifying the bit cell centre or being reset by the cycle signal (ZLSP) occurring during the loading process of the counter (110) and the flipflop (1206) being reloaded in each case by the latter cycle signal (ZLSP).

11. Circuit arrangement according to Claim 10, characterized in that the data output network (204) has, for outputting the recovered data signals (DI2) synchronized with the separate data clock (CLK2), an additional output stage with two further AND members (1211, 1212) and a further OR member (1213), which output stage is constructed identically to the first output stage and is analogously actuable by selection signals (PE/GCR), and further D-type flip flops (1210 and 1216) are provided which in each case are connected to one of the controlled inputs of the AND members, the one D-type flip flop (1210), itself controlled by the switch-over process of the D-type flip flop (1206) reloaded by the cycle signal (ZLSP), accepting the edge signal (FL) fed to its data input and the other D-type flip flop (1216), controlled by the cycle signal (ZLSP) occurring during the loading process of the counter (110), accepting the selection signal (ANSELN) for selectively actuating the second multiplexer (126).

12. Circuit arrangement according to one of Claims 6 to 11, characterized in that the control logic (118) also has a synchronization network (201) for phasing in the phase control circuit after an interruption of the transmission of data signals and this network is fed with an external synchronization signal (SYNC), the internal clock (CLOCK) and a regular sequence of data signals (DI) serving for synchronization and in the form of delayed marker pulses (MI-D) derived from them and in that the frequency register (116) is constructed as a binary counter controlled by the internal clock (CLOCK), one count modus of the register being initiated by a selection signal (SELFR) issued at the beginning of the synchronization process by the synchronization network and being reset again after the reception of a predetermined number of delayed marker pulses, and the frequency of the internal clock (CLOCK) in relation to the data clock contained in the subsequence of data signals (DI) and the width of the frequency register being selected in such a way that at the end of the count modus in the frequency register the initial rated value corresponding to the averaged momentary data frequency is present as the count value for the pase control circuit.

13. Circuit arrangement according to Claim 12, characterized in that the synchronization network (201) also has an evaluation stage (301, 302, 303) for phasing in the synchronization signal (SYNC) to the internal clock (CLOCK), which evaluation stage issues such an evaluated synchronization signal and in that an inverter (304) which converts this evaluated synchronization signal into a reset signal (RISFR) for the frequency register (116), and also a further RS trigger circuit (305) are provided which is set by the evaluated synchronization signal and in this state issues a first derived synchronization signal (SYCO1) which identifies a continuous synchronization process and in controlled units of the phase control circuit only blocks processes occurring in the phased-in state, in particular register loading and read-out processes.

14. Circuit arrangement according to Claim 13 with a synchronization network also characterized by an AND member (312) which is connected on the one hand to the normal output (Q) of the RS trigger circuit (305) set by the evaluated synchronization signal and which is in addition fed at the controlled input with the delayed marker pulses (MI-D), by a chain of D-type flip flops (306 to 311) connected in series in respect of their data outputs and data inputs, the clock inputs of which are connected in parallel to the output of the AND member (312) and the data input of the first D-type flip flop (306) of which is connected to the normal output (Q) of the RS trigger circuit (305), by an OR member (313), the inputs of which are connected to the inverted output ($\overline{Q}$) of the first D-type flip flop (306) or to the normal output (Q) of the second D-type flip flop (307) of the chain and which issues a second derived synchronization signal (SYCO2), and by a further RS flip flop (314) which is set by the second derived synchronization signal (SYCO2) and is reset by the reset signal (RESFR) or by a control signal (VELD) which is issued at the inverted output ($\overline{Q}$) of the penultimate D-type flip flop (310) and identifies the end of the synchronization process, the RS trigger circuit (305) set by the evaluated synchronization signal being reset with the delayed control signal (ELDP) which is issued at the output of the last D-type flip flop (311) of the chain and identifies the end of the count modus.

15. Circuit arrangement according to one of Claims 5 to 14, in which the internal clock selected in such a way that the nominal bit cell of the data signals, transmitted at the nominal frequency, is 24 clock periods wide, characterized in that the counter (110) is constructed as a 16-stage counter with a maximum of 32 counter states and can be loaded with new initial values between 0 and 15, in that the frequency register (116) is constructed as a binary counter with a maximum counter state which is n times the counter (110) and in that in the counter (110) a decoder (800) is provided which converts a four-place binary value (ZLAD0 to ZLAD3) supplied as the new initial value into a particular one of 16 decoder signals (DEC01 to DEC15) specific for a counter state and in that a loading network (802) for the register stages (803) of the counter (110) is connected to this decoder, which loading network converts the decoder signals supplied in parallel into loading signals (ZRP00 to ZRP14) supplied individually to the individual register stages.

16. Circuit arrangement according to Claim 15, characterized in that the storage register (112) has, in addition to a 16-stage register (1007) to which counter position signals (ZAE00 to ZAE15) corresponding

in each case to the current contents of the counter register stages (803) are fed in parallel, a decoder network which consists of OR connections (1008 or 1009) and which converts, in reverse in relation to the input circuits of the counter (110), the counter position signals, specifying together one counter state, into a binary value for the current counter state.

17. Circuit arrangement according to one of Claims 15 or 16, characterized in that the shift register (114) is constructed as a 16-stage register and has the intermediate storage register (120) connected in parallel to the register stages as well as a loading network, constructed from NAND members (1101 to 1104) for recoding the current position of a marker pulse (MI) in the shift register into a binary value and in that corresponding D-type flip flops (1105 to 1109) are provided for intermediate storage of this binary value.

18. Circuit arrangement according to Claim 17, characterized in that the clock input of the 16-stage register (1007) in the storage register (112) is fed with the delayed marker pulse (MI-D), evaluated with the internal clock (CLOCK), as transfer clock and on the other hand the D-type flip flops (1105 to 1109) in the intermediate storage register (120) are actuated in parallel by the cycle signal (ZS16) evaluated with the internal clock, which signal occurs together with the counter state (16) so that either the storage register or the intermediate storage register is selectively actuated.

**Revendications**

1. Montage pour récupérer des signaux de données binaires (DI) et des signaux de cadence de transmission de données (CLK2), contenus dans ces signaux de données, et comportant un circuit numérique de régulation de phase qui est commandé par une cadence interne (CLOCK) et auquel les signaux de données reçus (DI) sont envoyés sous la forme d'impulsions de marquage (MI), qui caractérisent les positions temporelles des flancs des signaux de données, et sous la forme de signaux de flancs (FL), qui caractérisent la direction du flanc, apparu en dernier, d'un signal de données, et qui comporte un détecteur de phase et un oscillateur commandable réalisé sous la forme d'un compteur (110) pouvant être chargé et qui est commandé par la cadence interne et peut être chargé par une valeur initiale variable (ZLAD0 à ZLAD3), qui correspond à la fréquence et à la phase de la cadence actuelle de transmission de données (CLK2), à partir d'un générateur extérieur de valeurs de consigne (124), de sorte qu'un cycle de comptage formant la base temporelle en permanence actualisée du circuit de régulation de phase est de ce fait fixé, caractérisé par le fait que le détecteur de phase comporte un registre à décalage (114), à travers lequel chaque impulsion de marquage (MI) est transférée sous la commande de la cadence interne et qui délivre une impulsion de marquage (MI-D), retardée d'un nombre prédéterminé de périodes internes de la cadence, que le détecteur de phase contient, en outre, un premier registre formant mémoire intermédiaire (112), associé au compteur, et un second registre formant mémoire intermédiaire (120), associé au registre à décalage, pour mémoriser temporairement l'état actuel du compteur sous la forme d'une valeur de phase en avance, ou la position actuelle de l'impulsion de marquage circulante en tant que valeur de phase en retard, respectivement sous la forme d'une valeur binaire, ces registres (112 et 120) pouvant être activés en alternance en fonction du fait que tout d'abord l'impulsion de marquage retardée (MI-D) ou un état prédéterminé de comptage (ZS16) apparaît et que par conséquent, en dehors de la valeur actuelle de la fréquence, de façon sélective le contenu du registre respectivement activé est envoyé en tant que valeur réelle de la phase au générateur extérieur de valeurs de consigne (124), pour l'obtention, à partir de cette valeur, de la nouvelle valeur initiale constituée par les actuelles valeurs de la fréquence et de la phase.

2. Montage suivant la revendication 1, caractérisé par le fait que le détecteur de phase comporte, en outre, un multiplexeur (122), dont les entrées sont raccordées aux sorties du registre formant mémoire (112) et du registre formant mémoire intermédiaire (120), et dont les sorties sont reliées à des entrées du générateur extérieur de valeurs de consigne (124) et qui est agencé de telle sorte que le contenu du registre formant mémoire ou du registre formant mémoire intermédiaire peut être transmis de façon sélective au générateur extérieur de valeurs de consigne, d'une manière déclenchée par des signaux de commande (SAKT ou RAKT) caractérisant l'état activé du registre correspondant.

3. Montage suivant la revendication 2, caractérisé par le fait qu'il est prévu un registre de fréquences (116) servant à mémoriser temporairement une valeur de consigne actuelle, délivrée en outre par le générateur de valeurs de consigne (124) et correspondant à la fréquence actuelle de la cadence de transmission de données, et que des sorties de ce registre sont reliées a des entrées du générateur extérieur de valeur de consigne de sorte que pour la production d'une nouvelle valeur initiale ou d'une nouvelle valeur de consigne, à ce générateur de valeurs de consigne sont envoyés le contenu du registre de fréquences en tant que valeur de consigne actuelle et la valeur de phase, sélectionnée par le multiplexeur (122), en tant que valeur réelle actuelle pour une comparaison valeur de consigne/valeur réelle.

4. Montage suivant la revendication 3, caractérisé par le fait qu'il est prévu un second multiplexeur (126), dont les entrées sont reliées à des sorties aussi bien du générateur de valeurs de consigne (124) que du registre de fréquences (116) et dont les sorties sont reliées au compteur (110), et que ce second multiplexeur est agencé de telle sorte qu'en fonction de l'apparition fixée d'une impulsion de marquage retardée (MI-D) pendant le cycle de comptage parcouru, ce multiplexeur raccorde directement, au choix, le générateur de valeurs de consigne ou, sinon, le registre de fréquences au compteur.

5. Montage suivant l'une des revendications 2 à 4, caractérisé par le fait que le générateur de valeurs de consigne (124) est réalisé sous la forme d'une mémoire, la valeur de phase sélectionnée par le premier multiplexeur (122) étant envoyée à des premières entrées d'adresses, tandis que le contenu du registre de fréquences (116) est envoyé à des secondes entrées d'adresses, de sorte que l'on peut, de ce fait, sélectionner un emplacement de mémoire, dans lequel peut être mémorisée respectivement une nouvelle valeur de consigne qui est associée aux combinaisons individuelles d'une valeur de consigne et d'une valeur réelle et doit être envoyée au registre de fréquences (116) ou bien une nouvelle valeur initiale du compteur (110).

6. Montage suivant l'une des revendications 2 à 5, caractérisé par le fait que dans le circuit de régulation de phase, il est prévu une logique de commande (118) servant à commander l'exécution du fonctionnement et que cette logique possède, à cet effet, un générateur d'états (203) servant à produire des signaux de cycle, dérivés de l'état actuel du compteur (110), un générateur de fenêtres (202) servant à produire des signaux de commande temporelle pour les autres modules du circuit de régulation de phase, et un réseau de délivrance de données (204) servant à produire les signaux de données récupérés (DI2) et la cadence séparée de transmission de données (CLK2).

7. Montage suivant la revendication 6, caractérisé par le fait que le compteur (110) est constitué par une multiplicité d'étages de registre (830), qui sont branchés en série et dont les états actuels reproduisent respectivement en commun l'état respectif du compteur et dont les sorties de données (Q) sont branchées en parallèle à des entrées du générateur d'états (203), et que, pour la production d'un signal de cycle (ZSi) correspondant à un étai (i) du compteur, le générateur d'états comporte respectivement un réseau logique (par exemple 904, 905), qui répond de façon sélective à des signaux déterminés de sortie des étages de registre (803), qui sont importants pour l'état précédent (i-1) du compteur, et un étage à bascule (par exemple 900), qui est raccordé à ce réseau, est commandé par la cadence interne (CLOCK) et délivre par conséquent, en synchronisme avec l'état (i) du compteur, pendant une période de la cadence interne, le signal de cycle correspondant (ZSi).

8. Montage suivant l'une des revendications 6 ou 7, caractérisé par le fait que le générateur de fenêtres (202) servant à produire un signal de sélection (ANSELP ou ANSELN) synchronisé avec le cycle du compteur, pour le second multiplexeur (126), comporte un circuit logique (611), qui, lorsqu'une impulsion de marquage (MI-D) apparaît dans le cycle en cours du compteur, est activé par les signaux de commande (RAKT, SAKT) dérivés de cette impulsion et auquel est relié un étage à bascule (610), qui, d'une manière commandée par l'un des signaux de cycle, prend un état de commutation correspondant et délivre le signal de commande de sélection pour le second multiplexeur.

9. Montage suivant la revendication 8, caractérisé par le fait que le générateur de fenêtres (202) possède en outre, pour la production d'un signal de commande (SFREG), qui déclenche le processus de charge du registre de fréquences (116), un autre étage à bascule (613), qui est commandé par la cadence interne (CLOCK) et auquel est envoyé un signal de cycle (ZLSP) synchronisé avec le chargement du compteur (110) et dont le signal de sortie positionne un circuit à bascule de type RS (602), et qu'il est en outre prévu dans le générateur de fenêtres, un autre circuit logique (612), qui, lorsque le circuit à bascule de type RS est dans l'état positionné, transmet directement le signal de sélection (ANSELP) pour le second multiplexeur (126) et par conséquent délivre le signal de commande de charge.

10. Montage suivant l'une des revendications 6 à 9, caractérisé par le fait que le réseau de délivrance des données (204), qui sert à délivrer la cadence séparée de transmission de données (CLK2) comporte un étage de sortie constitué par des circuits ET (1202, 1203) et un circuit OU (1204) relié à ces circuits, les circuits ET pouvant être activés au choix par des signaux de sélection (PE/GCR), qui sont envoyés à une première entrée et caractérisent la position possible d'un changement de flanc en rapport avec la cellule binaire dans le flux des signaux de données, et que la sortie d'un autre circuit à bascule de type RS (1205) et une sortie d'une bascule bistable de type D (1206) sont raccordées aux secondes entrées des circuits ET, le circuit à bascule de type RS (1205) étant positionné par un signal de cycle (ZSTD20) caractérisant le centre de la cellule binaire ou ramené à l'état initial par le signal de cycle (ZLSP) qui apparaît pendant le processus de charge du compteur (110), et la bascule bistable de type D (1206) étant commutée respectivement par le dernier signal de cycle (ZLSP).

11. Montage suivant la revendication 10, caractérisé par le fait que le réseau (204) de délivrance de données, qui sert à délivrer les signaux de données (DI2) récupérés et synchronisés avec la cadence séparée de transmission de données (CLK2), comporte un autre étage de sortie, qui possède une constitution identique au premier étage de sortie et peut être activé d'une manière analogue par des signaux de sélection (PE/GCR) et comporte deux autres circuits ET (1211, 1212) et un autre circuit OU (1213), et qu'il est prévu d'autres bascules bistables de type D (1210 et 1216), qui sont raccordées respectivement à l'une des entrées commandées des circuits ET, une bascule bistable de type D (1210), commandée pour sa part par l'opération de commutation de la bascule bistable de type D (1206) commutée par le signal de cycle (ZLSP), prenant en charge le signal de flanc (FL) envoyé à son entrée de données, tandis que l'autre bascule bistable de type D (1216), commandée par le signal de cycle (ZLSP) apparaissant pendant le processus de charge du compteur (110), prend en charge le signal de sélection (ANSELN) pour réaliser l'activation sélective du second multiplexeur (126).

12. Montage suivant l'une des revendications 6 à 11, caractérisé par le fait que la logique de commande (118) comporte en outre un réseau de synchronisation (201) servant à mettre en phase le circuit de régulation de phase après une opération de transmission de signaux de données et qu'à ce réseau sont envoyés un signal extérieur de synchronisation (SYNC), la cadence interne (CLOCK) et une suite régulière de signaux de données (DI) utilisés pour la synchronisation, sous la forme des impulsions de marquage retardées (MI-D) dérivées à partir de ces signaux, que le registre de fréquences (116) est agencé sous la forme d'un compteur binaire commandé par la cadence interne (CLOCK), qu'un mode de comptage du registre est déclenché par un signal de sélection (SELFR) délivré au début du processus de synchronisation réalisé par le réseau de synchronisation, et est à nouveau ramené à l'état initial, après la réception d'un nombre prédéterminé d'impulsions de marquage retardées, et que la fréquence de la cadence interne (CLOCK) est choisie en rapport avec la cadence de transmission de données, contenue dans la suite partielle des signaux de données (DI), et la largeur du registre de fréquences est choisie de telle sorte qu'à la fin du mode de comptage dans le registre de fréquences, la valeur de consigne initiale correspondant à la fréquence instantanée moyenne des données est disponible, comme valeur de comptage, pour le circuit de régulation de phase.

13. Montage suivant la revendication 12, caractérisé par le fait que le réseau de synchronisation (201) comporte en outre un étage de pondération (301, 302, 303) qui sert à synchroniser la phase du signal de synchronisation (SYNC) sur la cadence interne (CLOCK) et délivre un signal de synchronisation ainsi pondéré, et qu'il est prévu un inverseur (304), qui convertit ce signal de synchronisation pondéré en un signal de remise à l'état initial (RISFR) pour le registre de fréquences (116), et en outre un autre circuit à bascule de type RS (305), qui est positionné par le signal de synchronisation pondéré et, dans cet état, délivre un premier signal de synchronisation dérivé (SYCO1), qui caractérise un processus continuel de synchronisation et bloque uniquement des processus se déroulant dans l'état synchronisé en phase, notamment des processus de chargement et de lecture du registre, dans des unités commandées du circuit de régulation de phase.

14. Montage suivant la revendication 13, comportant un réseau de synchronisation, caractérisé en outre par un circuit ET (312), qui d'une part est raccordé à la sortie normale (Q) du circuit à bascule de type RS (305) positionné par le signal de synchronisation pondéré et à l'entrée commandée duquel sont envoyées en outre les impulsions de marquage retardées (MI-D), par une chaîne de bascules bistables de type D (306 à 311), qui sont branchées en série en rapport avec leurs sorties de données et leurs entrées de données et dont les entrées de cadence sont raccordées en parallèle à la sortie du circuit ET (312) et dans lesquelles l'entrée de données de la première bascule bistable de type D (306) est raccordée à la sortie normale (Q) du circuit à bascule de type RS (305), par un circuit OU (313), dont les entrées sont raccordées à la sortie inverse ($\bar{Q}$) de la première bascule bistable de type D (306) ou à la sortie normale (Q) de la seconde bascule bistable de type D (305) de la chaîne et qui délivre un second signal dérivé de synchronisation (SYCO2), et par un autre étage à bascule de type RS (314), qui est positionné par le second signal dérivé de synchronisation (SYCO2) et est ramené à l'état initial par le signal de remise à l'état initial (RESFR) ou par un signal de commande (VELD), qui est délivré sur la sortie inverse ($\bar{Q}$) de l'avant-dernière bascule bistable de type D (310) et caractérise la fin du processus de centralisation, auquel cas le circuit à bascule de type RS (305) positionné par le signal pondéré de synchronisation est ramené à l'état initial par le signal de commande retardé (ELDP), délivré par la sortie de la dernière bascule bistable de type D (311) de la chaîne, signal qui caractérise la fin du mode du compteur.

15. Montage suivant l'une des revendications 5 à 14, dans lequel la cadence interne est choisie de telle sorte que la cellule binaire nominale des signaux de données, transmise à la fréquence nominale, possède une largeur de 24 périodes de cadence, caractérisé par le fait que le compteur (110) est réalisé sous la forme d'un compteur à 16 étages comportant au maximum 32 états de comptage, et peut être chargé par neuf valeurs initiales entre 0 et 15, que le registre de fréquences (116) est réalisé sous la forme d'un compteur binaire possédant un état maximal de comptage égal à n fois celui du compteur (110), et que dans le compteur (110), il est prévu un décodeur (800), qui convertit une valeur binaire à quatre chiffres (ZLAD0 à ZLAD3), envoyée comme nouvelle valeur initiale, en l'un déterminé de 16 signaux de décodage (DEC01 à DEC15) spécifiques pour un état du compteur, et qu'a ce décodeur est raccordé un réseau de charge (802) pour les étages (803) du registre du compteur (110), ce réseau convertissant les signaux de décodage envoyés en parallèle, en des signaux de charge (ZRP00 à ZRP14) envoyés individuellement aux différents étages formant registre.

16. Montage suivant la revendication 15, caractérisé par le fait que le registre formant mémoire (112) comporte, en plus d'un registre à 16 étages (1007), auxquels sont envoyés en parallèle des signaux de position de comptage (ZAE00 à ZAE15) qui correspondent respectivement au contenu actuel des étages (803) du registre du compteur, un réseau de décodage qui est constitué par des circuits combinatoires OU (1008 et 1009) et qui convertit, à l'inverse des circuits d'entrée du compteur (110), les signaux de position de comptage spécifiant en commun un état du compteur, en une valeur binaire pour l'état actuel du compteur.

17. Montage suivant l'une des revendications 15 ou 16, caractérisé par le fait que le registre à décalage (114) est réalisé sous la forme d'un registre à 16 étages et que le registre formant mémoire intermédiaire (120), relié en parallèle aux étages du registre, comporte également un réseau de charge, constitué par des portes NON-ET (1101 à 1104) servant à réaliser le codage de la position actuelle d'une impulsion de marquage (MI) dans le registre à décalage, en une valeur binaire, et qu'il est prévu des bascules bistables de type D correspondantes (1105 à 1109) pour mémoriser temporairement cette valeur binaire.

18. Montage suivant la revendication 17, caractérisé par le fait qu'une impulsion de marquage retardée (MI-D), pondérée par la cadence interne (CLOCK), est envoyée en tant qu'impulsion de cadence de transfert à l'entrée de cadence d'un registre à 16 étages (1007) situé dans le registre formant mémoire (112), et que d'autre part les bascules bistables de type D (1105 à 1109) situées dans le registre formant mémoire intermédiaire (120) sont commandées en parallèle par le signal de cycle (ZSZ), qui est pondéré par la cadence interne et apparaît, conjointement avec l'état (16) du compteur, de sorte qu'au choix soit le registre formant mémoire, soit le registre formant mémoire intermédiaire est activé.

FIG 1

# FIG 2

EP 0 199 147 B1

FIG 3

EP 0 199 147 B1

# FIG 4

FIG 5

FIG 6

EP 0 199 147 B1

# FIG 7

# FIG 9

# FIG 8

FIG 10

EP 0 199 147 B1

# FIG 11

# FIG 12

EP 0 199 147 B1